(19) Europäisches Patentamt / European Patent Office / Office européen des brevets

(11) **EP 4 443 835 A1**

(12) **EUROPEAN PATENT APPLICATION**
published in accordance with Art. 153(4) EPC

(43) Date of publication:
**09.10.2024 Bulletin 2024/41**

(21) Application number: **22915232.7**

(22) Date of filing: **30.12.2022**

(51) International Patent Classification (IPC):
**H04L 41/14** (2022.01)

(52) Cooperative Patent Classification (CPC):
**H04L 41/082; H04L 41/0896; H04L 41/14;
H04L 41/16**

(86) International application number:
**PCT/CN2022/144185**

(87) International publication number:
**WO 2023/125985 (06.07.2023 Gazette 2023/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.12.2021 CN 202111658528**

(71) Applicant: **Huawei Technologies Co., Ltd.
Shenzhen, Guangdong 518129 (CN)**

(72) Inventors:
• **CHAI, Xiaomeng**
  **Shenzhen, Guangdong 518129 (CN)**
• **SUN, Yan**
  **Shenzhen, Guangdong 518129 (CN)**
• **WU, Yiqun**
  **Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **DATA PROCESSING METHOD AND APPARATUS FOR MODEL**

(57) A data processing method for a model and an apparatus are provided. The method includes: A first node determines the data processing method for the model; and the first node implements, according to the data processing method for the model, at least one of the following: performing model training or performing model inference. Based on the method and the apparatus, inference tasks for different radio resource configurations can be completed by using one model, so that overheads for model training and storage are reduced.

**EP 4 443 835 A1**

801: A first node determines a data processing method for an AI model

802: The first node implements, according to the data processing method for the AI model, at least one of the following: performing model training or performing model inference

FIG. 8

**Description**

**CROSS-REFERENCE TO RELATED APPLICATIONS**

This application claims priority to Chinese Patent Application No. 202111658528.4, filed with the China National Intellectual Property Administration on December 31, 2021 and entitled "DATA PROCESSING METHOD FOR MODEL, AND APPARATUS", which is incorporated herein by reference in its entirety.

**TECHNICAL FIELD**

This application relates to the field of communication technologies, and in particular, to a data processing method for a model and an apparatus.

**BACKGROUND**

In a wireless communication network, for example, in a mobile communication network, services supported by the network are increasingly diversified, and therefore, requirements that need to be met are increasingly diversified. For example, the network needs to be capable of supporting an ultra-high rate, an ultra-low latency, and/or an ultra-large connection. This characteristic makes network planning, network configuration, and/or resource scheduling increasingly complex. In addition, because a network function is increasingly powerful, for example, supporting an increasingly high spectrum and supporting new technologies such as a high-order multiple-input multiple-output (multiple-input multiple-output, MIMO) technology, beamforming, and/or beam management, network energy saving becomes a hot research topic. These new requirements, new scenarios, and new features bring unprecedented challenges to network planning, operation and maintenance, and efficient operation. To meet this challenge, an artificial intelligence technology may be introduced into the wireless communication network, to implement network intelligence. Based on this, how to effectively implement artificial intelligence in a network is a problem worth studying.

**SUMMARY**

This application provides a data processing method for a model and an apparatus, to complete inference tasks for different radio resource configurations by using one model, thereby reducing overheads for model training and storage.

According to a first aspect, a data processing method for a model is provided. The method is performed by a first node, where the first node is a model training node, a model inference node, or the like. Alternatively, the method may be performed by a component (a processor, a chip, or another component) configured in the first node, or may be performed by a software module, or the like. The method includes: determining the data processing method for the model; and implementing, according to the data processing method for the model, at least one of the following: performing model training or performing model inference.

Optionally, the data processing method for the model includes at least one of the following: an input data padding method for the model or an output data truncating method for the model; or the data processing method for the model includes at least one of the following: an input data truncating method for the model, or an output data padding method for the model.

According to the foregoing method, when the first node is a model inference node, the model inference node may complete, according to the data processing method, inference tasks for different radio resource configurations by using a same model. Compared with a method in which a corresponding model is separately configured for each radio resource configuration, this method can reduce overheads for model training and model storage.

In a design, the determining the data processing method for the model includes: receiving indication information from a second node, where the indication information indicates the data processing method for the model. The first node is different from the second node. For example, the first node is a model inference node or a model training node, and may receive indication information from another node (for example, the second node), where the indication information indicates the data processing method for the model. For example, the second node is OAM. Alternatively, when the first node is a model inference node, the second node may be a model training node. In this case, the model inference node may receive indication information or the like from the model training node. Alternatively, the data processing method for the model is determined as defined in a protocol.

According to the foregoing method, the model training node or the model inference node may obtain the data processing method for the model as defined in the protocol. Alternatively, the model training node or the model inference node receives an indication from another node, and determines the data processing method for the model or the like based on the indication from the another node. The model training node or the model inference node may flexibly determine the data processing method for the model.

In a design, the input data padding method or the output data padding method includes at least one of the following: a length of padded data, a padding data type, or a data padding rule.

In a design, the output data truncating method or the input data truncating method includes at least one of the following: a length of data after truncating, or a data truncating rule.

In a design, the performing model inference according to the data processing method for the model includes: performing data padding on first input data according to the input data padding method, to obtain second input data; determining first output data based on the second input data and the model; and performing data truncating on the first output data according to the output data truncating method.

According to the foregoing method in which the model inference node pads the input data and truncates the output data, inference tasks for different radio resource configurations can be completed by using one model, so that overheads for model training and storage are reduced. Optionally, in this design, an input length of the model is greater than or equal to a length of input data with a maximum input data length in all potential radio resource configurations, and an output length of the model is greater than or equal to a length of output data with a maximum output data length in all the potential radio resource configurations.

In a design, the performing model training according to the data processing method for the model includes: performing data padding on first input training data according to the input data padding method, to obtain second input training data; determining first output training data based on the second input training data and the model; performing data truncating on the first output training data according to the output data truncating method, to obtain second output training data; and performing parameter adjustment on the model based on the second output training data.

According to the foregoing method, in a model training process, training data in a plurality of radio resource configurations is collected as much as possible; training data in each radio resource configuration is separately processed by using a data processing method; and an AI model is trained based on processed training data until the AI model meets a condition, and in this case, the model training ends. A learning method in the model training process is not limited. For example, the learning method is a supervised learning (label learning) method, an unsupervised learning (non-label learning) method, or a reinforcement learning method. A model trained by using this method can meet inference tasks in various radio resource configurations, thereby reducing overheads for model training.

In a design, the performing model inference according to the data processing method for the model includes: performing data truncating on first input data according to the input data truncating method, to obtain second input data; determining first output data based on the second input data and the model; and performing data padding on the first output data according to the output data padding method.

According to the foregoing method in which the model inference node truncates the input data and pads the output data, inference tasks for different radio resource configurations can be completed by using one model, so that overheads for model training and storage are reduced.

In a design, the performing model training according to the data processing method for the model includes: performing data truncating on first input training data according to the input data truncating method, to obtain second input training data; determining first output training data based on the second input training data and the model; performing data padding on the first output training data according to the output data padding method, to obtain second output training data; and performing parameter adjustment on the model based on the second output training data.

According to the foregoing design, adjusting a model parameter in a model training process includes adjusting at least one of the following: a quantity of layers of a neural network, a width of the neural network, a connection relationship between layers, a weight value of a neuron, an activation function of the neuron, or an offset in the activation function, so that a difference between an output of a neural network element and an ideal target value is as small as possible.

In a design, the model includes a first sub-model. The performing model inference according to the data processing method for the model includes: determining first output data of the first sub-model; and performing data truncating on the first output data according to the output data truncating method.

In a design, the model includes a second sub-model. The performing model inference according to the data processing method for the model includes: performing data padding on first input data according to the input data padding method, to obtain second input data; and determining first output data based on the second input data and the second sub-model.

According to the foregoing method, a plurality of types of sub-models used in pairs may be simultaneously trained. For example, the first sub-model may be deployed on a terminal side, and the second sub-model may be deployed on a base station side. In addition, output data of the first sub-model is truncated, so that air interface overheads can be reduced.

In a design, the model includes a first sub-model and a second sub-model. The performing model training according to the data processing method for the model includes: determining first output training data of the first sub-model based on input training data of the first sub-model and the first sub-model; performing data truncating on the first output training data according to the output data truncating method, to obtain first input training data of the second sub-model; performing data padding on the first input training data of the second sub-model according to the input data padding method, to obtain second input training data; determining output training data of the second sub-model based on the second input training data and the second sub-model; and adjusting, based on the input training data of the first sub-model and the output training data of the second sub-model, at least one of the following: a model parameter of the first sub-model or a model parameter of the second sub-model.

According to a second aspect, a data processing method for a model is provided. The method is performed by a first node, where the first node is a model training node, a model inference node, or the like. Alternatively, the method may be performed by a component (a processor, a chip, or another component) configured in the first node, or may be performed by a software module, or the like. The method includes: sending indication information to a second node, where the indication information indicates the data processing method for the model.

The data processing method for the model includes at least one of the following: an input data padding method for the model or an output data truncating method for the model; or the data processing method for the model includes at least one of the following: an input data truncating method for the model, or an output data padding method for the model.

According to the foregoing method, in an example, the first node is a model training node. The model training node may determine a data processing method based on a data processing manner used during model training, and indicate the data processing method to the model inference node. When performing model inference, the model inference node processes data in a manner the same as that used during the training, so that the model inference node can correctly use the model to perform model inference, thereby improving accuracy of an output result of the model inference and an inference speed.

In a design, the input data padding method or the output data padding method includes at least one of the following: a length of padded data, a padding data type, or a data padding rule.

In a design, the output data truncating method or the input data truncating method includes at least one of the following: a length of data after truncating, or a data truncating rule.

According to a third aspect, an apparatus is provided. For beneficial effects, refer to the descriptions of the first aspect. The apparatus may be a first node, where the first node may be a model training node or a model inference node. Alternatively, the apparatus is an apparatus configured in the first node, or is an apparatus that can be used in match with the first node. In a design, the apparatus may include units that are in a one-to-one correspondence with the methods/operations/steps/actions described in the first aspect. The units may be implemented by using a hardware circuit, software, or a combination of a hardware circuit and software.

For example, the apparatus may include a processing unit, and the processing unit may perform corresponding functions in any design example of the first aspect. Specifically, it is as follows.

The processing unit is configured to: determine a data processing method for a model, and implement, according to the data processing method for the model, at least one of the following: performing model training or performing model inference, where

the data processing method for the model includes at least one of the following: an input data padding method for the model or an output data truncating method for the model; or the data processing method for the model includes at least one of the following: an input data truncating method for the model, or an output data padding method for the model.

For a specific execution process of the processing unit, refer to the first aspect. Details are not described herein again.

For example, the apparatus includes a processor, configured to implement the method described in the first aspect. The apparatus may further include a memory, configured to store instructions and/or data. The memory is coupled to the processor. When the processor executes the program instructions stored in the memory, the method described in the first aspect can be implemented. In a possible design, the apparatus includes:

a memory, configured to store program instructions; and
a processor, configured to: determine a data processing method for a model, and implement, according to the data processing method for the model, at least one of the following: performing model training or performing model inference, where
the data processing method for the model includes at least one of the following: an input data padding method for the model or an output data truncating method for the model; or the data processing method for the model includes at least one of the following: an input data truncating method for the model, or an output data padding method for the model.

For a specific execution process of the processor, refer to the descriptions of the first aspect. Details are not described again.

According to a fourth aspect, an apparatus is provided. For beneficial effects, refer to the descriptions of the second aspect. The apparatus may be a first node, where the first node may be a model training node. Alternatively, the apparatus is an apparatus configured in the first node, or is an apparatus that can be used in match with the first node, or the like. In a design, the apparatus includes units that are in a one-to-one correspondence with the methods/operations/steps/actions described in the second aspect. The units may be implemented by using a hardware circuit, software, or a combination of a hardware circuit and software.

For example, the apparatus may include a communication unit, and the communication unit may perform corresponding functions in any design example of the second aspect. Specifically, it is as follows.

The communication unit is configured to send indication information to a second node, and the indication information indicates a data processing method for a model, where

the data processing method for the model includes at least one of the following: an input data padding method for the model or an output data truncating method for the model; or the data processing method for the model includes at least one of the following: an input data truncating method for the model, or an output data padding method for the model.

For a specific execution process of the communication unit, refer to the second aspect. Details are not described herein again.

For example, the apparatus includes a processor, configured to control a communication interface to implement the method described in the second aspect. The apparatus may further include a memory, configured to store instructions and/or data. The memory is coupled to the processor. When the processor executes the program instructions stored in the memory, the method described in the second aspect can be implemented. The apparatus may further include a communication interface, and the communication interface is used by the apparatus to communicate with another device. For example, the communication interface may be a transceiver, a circuit, a bus, a module, a pin, or another type of communication interface, and the another device may be a model inference node or the like. In a possible design, the apparatus includes:

a memory, configured to store program instructions; and
a processor, configured to control a communication interface to send indication information to a second node, where the indication information indicates the data processing method for the model, where

the data processing method for the model includes at least one of the following: an input data padding method for the model or an output data truncating method for the model; or the data processing method for the model includes at least one of the following: an input data truncating method for the model, or an output data padding method for the model.

For specific execution processes of the communication interface and the processor, refer to the descriptions of the second aspect. Details are not described again.

According to a fifth aspect, this application further provides a computer-readable storage medium, including instructions. When the instructions are run on a computer, the computer is enabled to perform the method in the first aspect or the second aspect.

According to a sixth aspect, this application further provides a chip system. The chip system includes a processor, may further include a memory, and is configured to implement the method in the first aspect or the second aspect. The chip system may include a chip, or may include a chip and another discrete component.

According to a seventh aspect, this application further provides a computer program product, including instructions. When the instructions are run on a computer, the computer is enabled to perform the method in the first aspect or the second aspect.

According to an eighth aspect, this application further provides a system. The system includes the apparatus in the third aspect and the apparatus in the fourth aspect.

## BRIEF DESCRIPTION OF DRAWINGS

FIG. 1 is a diagram of a communication system according to this application;
FIG. 2 and FIG. 3 each are a diagram of deployment of AI models according to this application;
FIG. 4a and FIG. 4b each are a diagram of an architecture of a communication system according to this application;
FIG. 4c is a diagram of training an AI model for each bandwidth according to this application;
FIG. 5 is a diagram of an application architecture of an AI model according to this application;
FIG. 6 is a diagram of a neuron according to this application;
FIG. 7 is a diagram of a neural network according to this application;
FIG. 8 and FIG. 9A each are a flowchart of a data processing method for a model according to this application;
FIG. 9B and FIG. 9C respectively show data processing processes in a model training phase and a model inference phase;
FIG. 10 and FIG. 11 are respectively diagrams of a type-1 reference signal and a type-2 reference signal;

FIG. 12 is a diagram of a CSI feedback procedure according to this application;

FIG. 13 is a diagram of data processing in a CSI feedback procedure according to this application;

FIG. 14 is a diagram of a Transformer model according to this application;

FIG. 15 and FIG. 16 each are a diagram of splitting original data into vectors according to this application; and

FIG. 17 and FIG. 18 each are a diagram of a structure of a communication apparatus according to this application.

## DESCRIPTION OF EMBODIMENTS

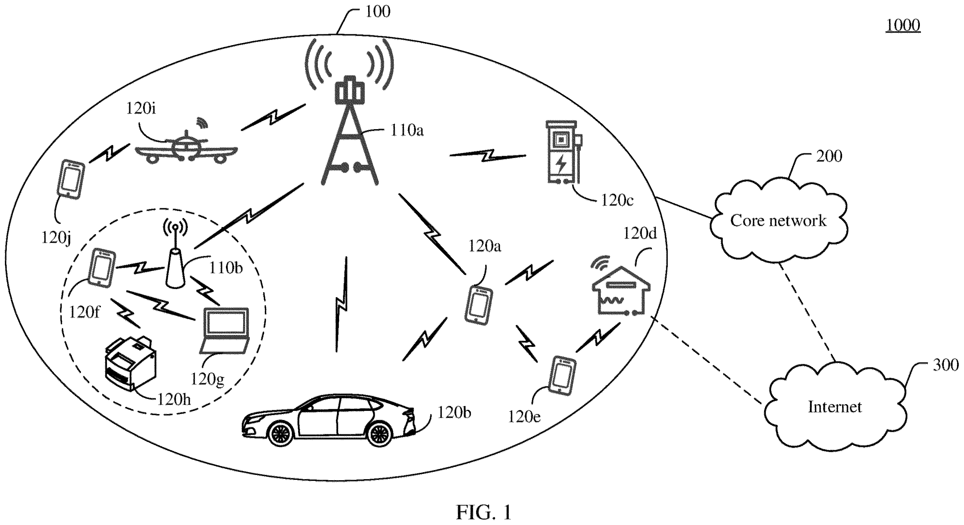

FIG. 1 is a diagram of an architecture of a communication system 1000 to which this application is applicable. As shown in FIG. 1, the communication system includes a radio access network 100 and a core network 200. Optionally, the communication system 1000 may further include an internet 300. The radio access network 100 may include at least one access network device (for example, 110a and 110b in FIG. 1), and may further include at least one terminal device (for example, 120a to 120j in FIG. 1). The terminal device is connected to the access network device in a wireless manner, and the access network device is connected to the core network in a wireless or wired manner. A core network device and the access network device may be different physical devices that are independent of each other, or functions of a core network device and logical functions of the access network device may be integrated into a same physical device, or some functions of a core network device and some functions of the access network device may be integrated into one physical device. Terminal devices may be connected to each other in a wired or wireless manner, and access network devices may be connected to each other in a wired or wireless manner. FIG. 1 is only a diagram. The communication system may further include another network device, for example, may further include a wireless relay device, a wireless backhaul device, and the like, which are not shown in FIG. 1.

The access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, an access network device in an open radio access network (open radio access network, O-RAN), a next generation base station in a 6th generation (6th generation, 6G) mobile communication system, a base station in a future mobile communication system, an access node in a wireless fidelity (wireless fidelity, Wi-Fi) system, or the like, or may be a module or a unit, for example, may be a central unit (central unit, CU), a distributed unit (distributed unit, DU), a central unit control plane (CU control plane, CU-CP) module, or a central unit user plane (CU user plane, CU-UP) module, that completes some functions of a base station. The access network device may be a macro base station (for example, 110a in FIG. 1), or may be a micro base station or an indoor base station (for example, 110b in FIG. 1), or may be a relay node, a donor node, or the like. A specific technology and a specific device form that are used by the access network device are not limited in this application.

In this application, an apparatus configured to implement the functions of the access network device may be an access network device, or may be an apparatus, for example, a chip system, a hardware circuit, a software module, or a combination of a hardware circuit and a software module, that can support the access network device in implementing the functions, where the apparatus may be installed in the access network device or may be matched with the access network device for usage. In this application, the chip system may include a chip, or may include a chip and another discrete component. For ease of descriptions, the following describes the technical solutions provided in this application by using an example in which the apparatus configured to implement the functions of the access network device is an access network device and the access network device is a base station.

(1) Protocol layer structure

Communication between an access network device and a terminal device complies with a specified protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a media access control (media access control, MAC) layer, and a physical layer. For example, the user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.

Optionally, the protocol layer structure between the access network device and the terminal device may further include an artificial intelligence (artificial intelligence, AI) layer, used to transmit data related to an AI function.

(2) Central unit (central unit, CU) and distributed unit (distributed unit, DU)

An access device may include a CU and a DU. A plurality of DUs may be controlled by one CU in a centralized manner. For example, an interface between the CU and the DU may be referred to as an F1 interface. A control plane (control plane, CP) interface may be F1-C, and a user plane (user plane, UP) interface may be F1-U. A specific name of each interface is not limited in this application. The CU and the DU may be obtained through division based on protocol layers of a radio network. For example, functions of the PDCP layer and protocol layers above the PDCP layer are set on the CU, and functions of protocol layers (for example, the RLC layer and the MAC layer) below the PDCP layer are set on the DU. For another example, functions of protocol layers above the PDCP layer are set on the CU, and functions of the PDCP layer and protocol layers below the PDCP layer are set on the DU. This is not limited.

Division of processing functions of the CU and the DU based on the protocol layers is merely an example, and the processing functions of the CU and the DU may alternatively be divided in another manner. For example, the CU or the DU may have functions of more protocol layers through division, and for another example, the CU or the DU may alternatively have a part of processing functions of the protocol layers through division. In a design, some functions of the RLC layer and functions of protocol layers above the RLC layer are set on the CU, and remaining functions of the RLC layer and functions of protocol layers below the RLC layer are set on the DU. In another design, division of functions of the CU or the DU may alternatively be performed based on service types or other system requirements. For example, division may be performed based on a latency. Functions whose processing time needs to meet a latency requirement are set on the DU, and functions whose processing time does not need to meet the latency requirement are set on the CU. In another design, the CU may alternatively have one or more functions of the core network. For example, the CU may be disposed on a network side to facilitate centralized management. In another design, a radio unit (radio unit, RU) of the DU is disposed remotely. Optionally, the RU may have a radio frequency function.

Optionally, the DU and the RU may be divided at a physical layer (physical layer, PHY). For example, the DU may implement higher-layer functions of the PHY layer, and the RU may implement lower-layer functions of the PHY layer. When the PHY layer is used for sending, the PHY layer may include at least one of the following functions: cyclic redundancy check (cyclic redundancy check, CRC) code addition, channel encoding, rate matching, scrambling, modulation, layer mapping, precoding, resource mapping, physical antenna mapping, or radio frequency sending. When the PHY layer is used for receiving, the PHY layer may include at least one of the following functions: CRC, channel decoding, de-rate matching, descrambling, demodulation, layer demapping, channel detection, resource demapping, physical antenna demapping, or radio frequency receiving. The higher-layer functions of the PHY layer may include some functions of the PHY layer. For example, the some functions are closer to the MAC layer. The lower-layer functions of the PHY layer may include some other functions of the PHY layer. For example, the some other functions are closer to the radio frequency function. For example, the higher-layer functions of the PHY layer may include CRC code addition, channel coding, rate matching, scrambling, modulation, and layer mapping; and the lower-layer functions of the PHY layer may include precoding, resource mapping, physical antenna mapping, and radio frequency sending functions. Alternatively, the higher-layer functions of the PHY layer may include CRC code addition, channel coding, rate matching, scrambling, modulation, layer mapping, and precoding; and the lower-layer functions of the PHY layer may include resource mapping, physical antenna mapping, and radio frequency sending functions. For example, the higher-layer functions of the PHY layer may include the CRC, the channel decoding, the de-rate matching, the decoding, the demodulation, and the layer demapping; and the lower-layer functions of the PHY layer may include the channel detection, the resource demapping, the physical antenna demapping, and the radio frequency receiving. Alternatively, the higher-layer functions of the PHY layer may include the CRC, the channel decoding, the de-rate matching, the decoding, the demodulation, the layer demapping, and the channel detection; and the lower-layer functions of the PHY layer may include the resource demapping, the physical antenna demapping, and the radio frequency receiving.

For example, the functions of the CU may be implemented by one entity, or may be implemented by different entities. For example, functions of the CU may be further divided, that is, a control plane and a user plane are separated and implemented by different entities, which are a control plane CU entity (namely, a CU-CP entity) and a user plane CU entity (namely, a CU-UP entity). The CU-CP entity and the CU-UP entity may be coupled to the DU, to jointly complete functions of an access network device.

Optionally, any one of the DU, the CU, a CU-CP, a CU-UP, and the RU may be a software module, a hardware structure, or a combination of a software module and a hardware structure. This is not limited. Different entities may exist in different forms. This is not limited. For example, the DU, the CU, the CU-CP, and the CU-UP are software modules, and the RU is a hardware structure. These modules and methods performed by these modules also fall within the protection scope of this application.

In a possible implementation, the access network device includes a CU-CP, a CU-UP, a DU, and an RU. For example, this application is executed by the DU, or the DU and the RU, or the CU-CP, the DU, and the RU, or the CU-UP, the DU, and the RU. This is not limited. Methods performed by the modules also fall within the protection scope of this application.

The terminal device may alternatively be referred to as a terminal, user equipment (user equipment, UE), a mobile station, a mobile terminal device, or the like. The terminal device may be widely used for communication in various scenarios, for example, including but not limited to at least one of the following scenarios: device-to-device (device-to-device, D2D), vehicle-to-everything (vehicle-to-everything, V2X), machine-type communication (machine-type communication, MTC), internet of things (internet of things, IOT), virtual reality, augmented reality, industrial control, autonomous driving, telemedicine, a smart grid, smart furniture, smart office, smart wearables, smart transportation, a smart city, and the like. The terminal device may be a mobile phone, a tablet computer, a computer with a wireless transceiver function, a wearable device, a vehicle, an uncrewed aerial vehicle, a helicopter, an airplane, a ship, a robot, a robotic arm, a smart home device, or the like. A specific technology and a specific device form that are used by the terminal device are not limited in this application.

In this application, an apparatus configured to implement a function of the terminal device may be a terminal device, or may be an apparatus that can support the terminal device in implementing the function, for example, a chip system, a hardware circuit, a software module, or a combination of a hardware circuit and a software module. The apparatus may be installed in the terminal device or may be matched with the terminal device for usage. For ease of description, the following describes the technical solutions provided in this application by using an example in which the apparatus configured to implement the function of the terminal device is a terminal device and the terminal device is UE.

The base station and the terminal device may be fixed, or may be movable. The base station and/or the terminal device may be deployed on land, including an indoor or outdoor scenario, and a handheld or vehicle-mounted scenario, or may be deployed on water, or may be deployed on an airplane, a balloon, and an artificial satellite in the air. Application scenarios of the base station and the terminal device are not limited in this application. The base station and the terminal device may be deployed in a same scenario or different scenarios. For example, both the base station and the terminal device are deployed on land; or the base station is deployed on land, and the terminal device is deployed on water. Examples are not provided one by one again.

Roles of the base station and the terminal device may be relative. For example, a helicopter or an uncrewed aerial vehicle 120i in FIG. 1 may be configured as a mobile base station. For the terminal device 120j that accesses the radio access network 100 through 120i, the terminal device 120i is a base station. However, for the base station 110a, 120i is a terminal device. In other words, 110a and 120i communicate with each other based on a radio air interface protocol. 110a and 120i may alternatively communicate with each other based on an interface protocol between base stations. In this case, for 110a, 120i is also a base station. Therefore, both the base station and the terminal device may be collectively referred to as a communication apparatus. 110a and 110b in FIG. 1 may be referred to as a communication apparatus having a function of the base station, and 120a to 120j in FIG. 1 may be referred to as a communication apparatus having a function of the terminal device.

In this application, an independent network element (for example, referred to as an AI network element or an AI node) may be introduced into the communication system shown in FIG. 1 to implement an AI-related operation. The AI network element may be directly connected to the access network device in the communication system, or may be indirectly connected to the access network device by using a third-party network element. The third-party network element may be a core network element like an authentication management function (authentication management function, AMF) or a user plane function (user plane function, UPF). Alternatively, an AI function, an AI module, or an AI entity may be configured in another network element in the communication system to implement an AI-related operation. For example, the another network element may be an access network device (like a gNB), a core network device, or operation, administration and maintenance (operation, administration and maintenance, OAM). In this case, a network element that performs the AI-related operation is a network element with a built-in AI function. The OAM is configured to perform an operation, management, maintenance, and the like on the access network device and/or the core network device.

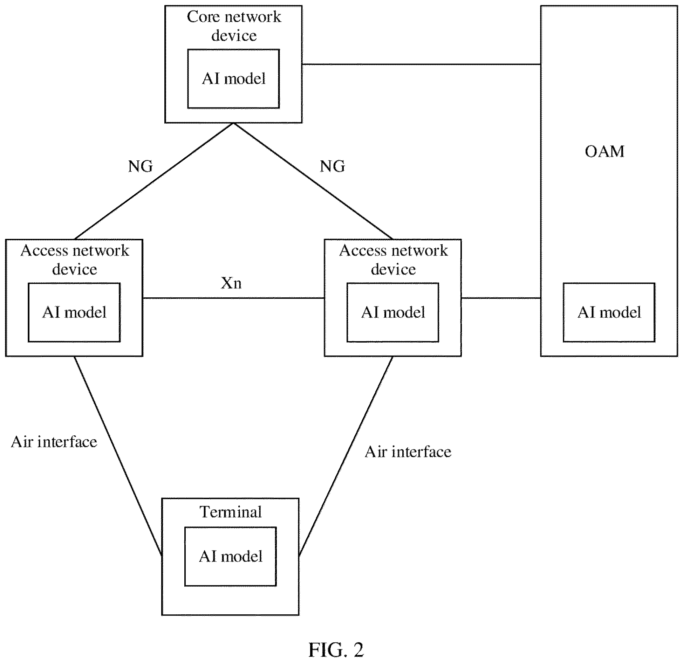

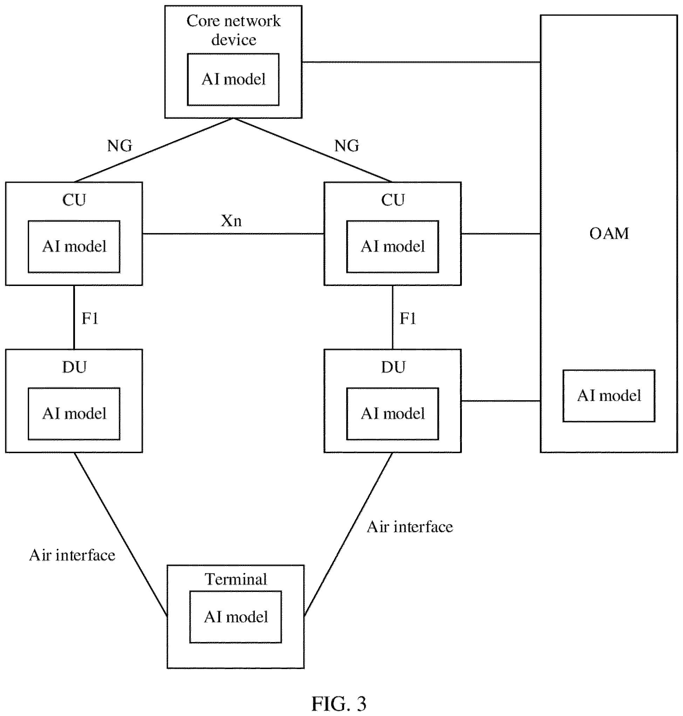

In this application, as shown in FIG. 2 or FIG. 3, an AI model may be deployed on at least one of a core network device, an access network device, a terminal device, OAM, or the like, and a corresponding function is implemented by using the AI model. In this application, AI models deployed on different nodes may be the same or different. That the models are different includes at least one of the following: structure parameters of the models, for example, quantities of layers and/or weight values of the models, are different; input parameters of the models are different; output parameters of the models are different; or the like. That the input parameters of the models and/or the output parameters of the models are different may be described as the following: Functions of the models are different. Different from that in FIG. 2, in FIG. 3, the access network device is split into a CU and a DU in terms of functions. Optionally, the CU and the DU may be a CU and a DU in an O-RAN architecture. One or more AI models may be deployed in the CU. In addition/Alternatively, one or more AI models may be deployed in the DU. Optionally, the CU in FIG. 3 may be further split into a CU-CP and a CU-UP. Optionally, one or more AI models may be deployed in the CU-CP. In addition/Alternatively, one or more AI models may be deployed in the CU-UP. Optionally, in FIG. 2 or FIG. 3, the OAM of the access network device and the OAM of the core network device may be separately and independently deployed.

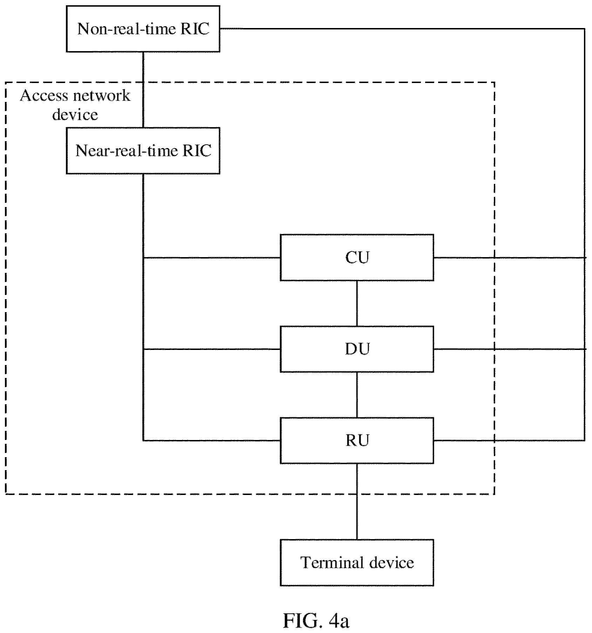

Optionally, FIG. 4a is an architecture of a communication system according to this application. As shown in FIG. 4a, in a first design, the access network device includes a near-real-time radio access network intelligent controller (RAN intelligent controller, RIC) module, configured to perform model training and inference. For example, the near-real-time RIC may be configured to: train an AI model, and perform inference by using the AI model. For example, the near-real-time RIC may obtain information on a network side and/or a terminal side from at least one of a CU, a DU, or

**EP 4 443 835 A1**

an RU, and the information may be used as training data or inference data. Optionally, the near-real-time RIC may submit an inference result to at least one of the CU, the DU, the RU, or the terminal device. Optionally, the CU and the DU may exchange the inference result. Optionally, the DU and the RU may exchange the inference result. For example, the near-real-time RIC submits the inference result to the DU, and the DU forwards the inference result to the RU.

Alternatively, in a second design, as shown in FIG. 4a, a non-real-time RIC (optionally, the non-real-time RIC may be located in the OAM or the core network device) is included outside the access network device, and is configured to perform model training and inference. For example, the non-real-time RIC is configured to: train an AI model, and perform inference by using the model. For example, the non-real-time RIC may obtain information on the network side and/or the terminal side from at least one of the CU, the DU, or the RU. The information may be used as training data or inference data, and an inference result may be submitted to at least one of the CU, the DU, the RU, or the terminal device. Optionally, the CU and the DU may exchange the inference result. Optionally, the DU and the RU may exchange the inference result. For example, the non-real-time RIC submits the inference result to the DU, and the DU forwards the inference result to the RU.

Alternatively, in a third design, as shown in FIG. 4a, the access network device includes a near-real-time RIC, and a non-real-time RIC (optionally, the non-real-time RIC may be located in the OAM or the core network device) is included outside the access network device. Same as that in the foregoing second design, the non-real-time RIC may be configured to perform model training and inference. In addition/Alternatively, same as that in the foregoing first design, the near-real-time RIC may be configured to perform model training and inference. In addition/Alternatively, the non-real-time RIC performs model training, and the near-real-time RIC may obtain AI model information from the non-real-time RIC, obtain information on the network side and/or the terminal side from at least one of the CU, the DU, or the RU, and obtain an inference result by using the information and the AI model information. Optionally, the near-real-time RIC may submit the inference result to at least one of the CU, the DU, the RU, or the terminal device. Optionally, the CU and the DU may exchange the inference result. Optionally, the DU and the RU may exchange the inference result. For example, the near-real-time RIC submits the inference result to the DU, and the DU forwards the inference result to the RU. For example, the near-real-time RIC is configured to: train a model A and perform inference by using the model A. For example, the non-real-time RIC is configured to: train a model B and perform inference by using the model B. For example, the non-real-time RIC is configured to: train a model C, and send information about the model C to the near-real-time RIC. The near-real-time RIC performs inference by using the model C.

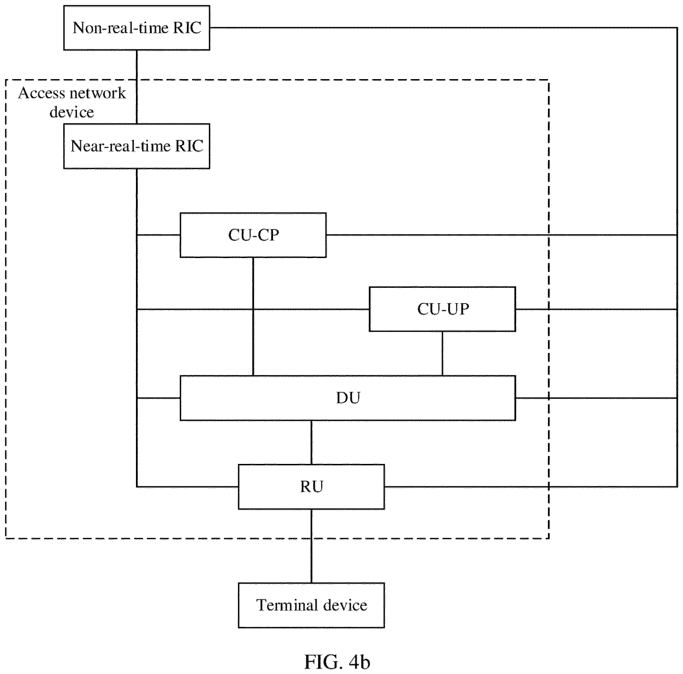

FIG. 4b is an architecture of another communication system according to this application. Compared with that in FIG. 4a, a CU in FIG. 4b is separated into a CU-CP, a CU-UP, and the like.

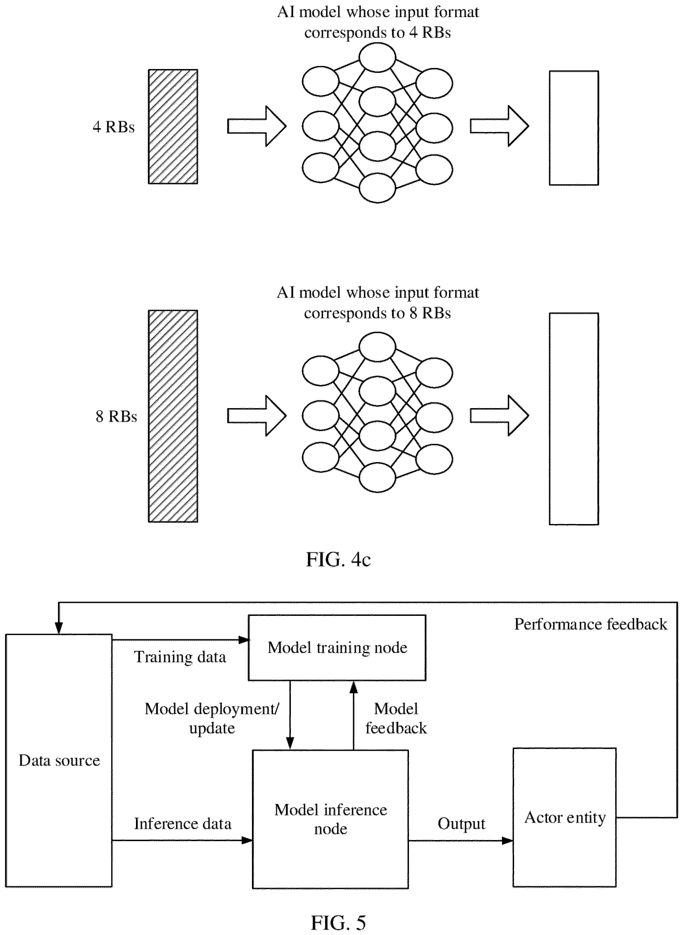

In a wireless network, when an AI model is used, a problem that needs to be resolved is a conflict between a flexible and variable signal format in the wireless network and a fixed input format and a fixed output format of the AI model. For example, a bandwidth of a radio signal is flexibly scheduled by a base station. A bandwidth that may be scheduled in one slot is four resource blocks (resource blocks, RB), and a bandwidth that may be scheduled in a next slot may change to 8 RBs. However, the input format of the AI model is fixed, and cannot change with the bandwidth of the signal. For example, if the input format of the AI model corresponds to 4 RBs, the AI model supports only a signal whose input bandwidth is 4 RBs, and cannot process a signal whose input bandwidth is 8 RBs. To resolve the foregoing problem, a solution is provided: An AI model is trained for each bandwidth. As shown in FIG. 4c, an AI model is separately trained for a signal whose input bandwidth is 4 RBs and a signal whose input bandwidth is 8 RBs. This leads to high overheads for both training and storage.

In this application, a solution is provided. In the solution, an AI model is trained, and the AI model is applicable to input data and output data in a plurality of formats. Specifically, during training, data (for example, input data and/or output data) in different formats or the like is converted into data in a same format through padding, truncating, or the like, to jointly train an AI model. The AI model is applicable to the plurality of formats. When the AI model is used or performs inference, the input data and/or the output data are/is converted, by using a data processing method the same as that used during the training, into input data and/or output data that match the AI model, so that inference tasks for different radio resource configurations are completed by using a same AI model, and overheads for training and storage are reduced. It should be noted that at least two examples are included in the solution of this application. For example, an AI model is trained for input data and/or output data in all formats. For example, scheduled bandwidths in a wireless network include 4 RBs, 8 RBs, 16 RBs, and 32 RBs. In this case, an AI model is trained for the foregoing four scheduled bandwidths. In the following description, this example is mainly used for description. Alternatively, an AI model is designed for input data and/or output data in some formats, and another AI model is designed for input data and/or output data in another format. For example, a first AI model is trained for scheduled bandwidths of 4 RBs and 8 RBs. In other words, the first AI model is applicable to an input of signals of 4 RBs and 8 RBs. A second AI model is trained for scheduled bandwidths of 16 RBs and 32 RBs. In other words, the second AI model is applicable to an input of signals of 16 RBs and 32 RBs, and the like.

For ease of understanding, terms or concepts in this application are first described.

1. AI model.

The AI model is a specific implementation of an AI function. The AI model represents a mapping relationship between an input and an output of a model. The AI model may be a neural network, a linear regression model, a decision tree model, a support vector machine (support vector machine, SVM), a Bayesian network, a Q learning model, another machine learning model, or the like. In this application, the AI function may include at least one of the following: data collection (collecting training data and/or inference data), data preprocessing, model training (or referred to as model learning), model information release (configuration model information), model verification, model inference, or inference result release. The inference may alternatively be referred to as prediction. In this application, the AI model may be referred to as a model for short.

AI model design mainly includes a data collection section (for example, a data source may collect training data and/or inference data), a model training section, and a model inference section. Further, the AI model design may further include an inference result application section. Optionally, the AI model design may further include a model testing section. FIG. 5 is a diagram of an application architecture of an AI model. A data source (data source) is configured to provide training data and inference data. In the model training section, a model training node (model training host) analyzes or trains the training data (training data) provided by the data source, to obtain an AI model. Obtaining the AI model through learning by the model training node is equivalent to obtaining the mapping relationship between the input and the output of the model through learning by the model training node by using training data. The AI model is deployed on the model inference node (model inference host). Optionally, the model training node may further update the AI model that is deployed on the model inference node. The model inference node may further feed back related information of the deployed model to the model training node, so that the model training node optimizes or updates the deployed AI model, and the like.

In the model reference section, the model inference node uses the AI model to perform inference based on the inference data provided by the data source, to obtain an inference result. The method may be implemented as follows: The model inference node inputs the inference data to the AI model, and obtains an output by using the AI model. The output is the inference result. The inference result may indicate a configuration parameter used (acted) by a subject of action, and/or an operation performed by the subject of action. The inference result may be centrally planned by an actor (actor) entity, and sent to one or more subjects of action (for example, network entities) for action. Optionally, the actor entity or the subject of action may further feed back performance of the model to the data source, where the performance of the model is used as training data, to facilitate subsequent model update training.

2. Neural network (neural network, NN).

The AI model may be a neural network or another machine learning model. The neural network is used as an example. The neural network is a specific implementation form of a machine learning technology. According to a universal approximation theorem, the neural network may theoretically approximate to any continuous function, so that the neural network has a capability of learning any mapping. Therefore, the neural network can accurately perform abstract modeling on a complex high-dimensional problem.

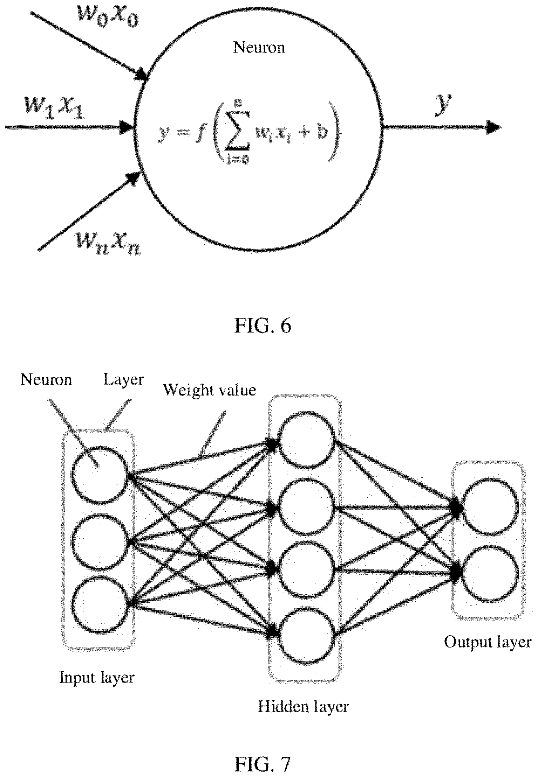

The idea of the neural network comes from the neuron structure of brain tissue. Each neuron performs a weighted summation operation on input values of the neuron, and outputs a weighted summation result through an activation function. FIG. 6 is a diagram of a structure of a neuron. It is assumed that inputs of the neuron are $x = [x_0, x_1, \ldots, x_n]$, weight values corresponding to the inputs are respectively $w = [w, w_1, \ldots, w_n]$, and an offset of the weighted summation is b. There may be diversified forms of the activation function. If an activation function of a neuron is $y = f(z)$ = max(0, z), an output of the neuron is $y = f\left(\sum_{i=0}^{i=n} w_i * x_i + b\right) = \max(0, \sum_{i=0}^{i=n} w_i * x_i + b)$. For another example, if an activation function of a neuron is $y = f(z) = z$, an output of the neuron is $y = f\left(\sum_{i=0}^{i=n} w_i * x_i + b\right) = \sum_{i=0}^{i=n} w_i * x_i + b$, where $w_i$, $x_i$, and b may be various possible values such as a decimal, an integer (including 0, a positive integer, a negative integer, or the like), or a complex number. Activation functions of different neurons in a neural network may be the same or different.

The neural network generally includes a multi-layer structure, and each layer may include one or more neurons. Increasing a depth and/or a width of the neural network can improve an expression capability of the neural network, and provide more powerful information extraction and abstract modeling capabilities for complex systems. The depth of the neural network may refer to a quantity of layers included in the neural network, and a quantity of neurons included in each layer may be referred to as a width of the layer. FIG. 7 is a diagram of a layer relationship of a neural network. In an implementation, the neural network includes an input layer and an output layer. After performing neuron processing on a received input, the input layer of the neural network transfers a result to the output layer, and the output layer obtains an output result of the neural network. In another implementation, the neural network includes an input layer, a hidden layer, and an output layer. After performing neuron processing on a received input, the input layer of the neural network transfers a result to an intermediate hidden layer. Then, the hidden layer transfers a calculation result to the output layer or an adjacent hidden layer. Finally, the output layer obtains an output result of the neural network. A neural network may include one hidden layer or a plurality of hidden layers that are sequentially connected. This is not limited. In a training process of the neural network, a loss function may be defined. The loss function describes a gap or a difference between an output value of the neural network and an ideal target value. A specific form of the loss function is not limited in this application. The training process of the neural network is a process of adjusting neural network parameters such as a quantity of layers and a width of the neural network, a weight value of a neuron, and/or a parameter in an activation function of a neuron, so that a value of the loss function is less than a threshold or meets a target requirement.

3. AI model training.

In a training process of an AI model, a loss function may be defined. The loss function describes a gap or a difference between an output value of the AI model and an ideal target value. A specific form of the loss function is not limited in this application. The training process of the AI model is a process in which some or all parameters of the AI model are adjusted to enable, for one or more pieces of training data, a value of the loss function or a weighted summation value (for example, an average value) is less than a threshold or meets a target requirement. If the AI model is a neural network, one or more of the following parameters may be adjusted in the training process: a quantity of layers of the neural network, a width of the neural network, a connection relationship between layers, a weight value of a neuron, an activation function of the neuron, or an offset in the activation function, so that a difference between an output of a neural network element and an ideal target value is as small as possible.

In a design, an example in which the AI model is a neural network $f_\theta(\cdot)$ is used. A model training node collects training data, where the training data includes a training sample and a label. For example, a training sample x is used as an input, an inference result $f_\theta(x)$ is output after the neural network $f_\theta(\cdot)$ processes the training sample x, and a difference between the inference result $f_\theta(x)$ and a label of the training sample x is obtained through calculation by using the loss function. The model training node may optimize, based on the difference obtained by using the loss function, a network parameter by using a model optimization algorithm. The neural network is trained by using a large amount of training data, so that for a group of training samples (for example, one or more training samples), a difference between an output of a neural network of each training sample and a label of the training sample is less than the threshold or meets the target requirement; or a weighted summation value (for example, an average value) of differences between outputs of neural networks of all training samples and labels of all the training samples is less than the threshold or meets the target requirement, to complete training for the neural network.

It should be noted that a training manner of supervised learning is described in the foregoing process, and is not intended to limit this application. In this application, the AI model training may alternatively be performed by using unsupervised learning. An internal mode of a training sample is learned by using an algorithm, to complete the AI model training based on the training sample. The AI model training may further be performed by using reinforcement learning. An excitation signal fed back by an environment is obtained through interaction with the environment, to learn a problem-resolving policy, optimize the AI model, and the like. In this application, a model training method is not limited.

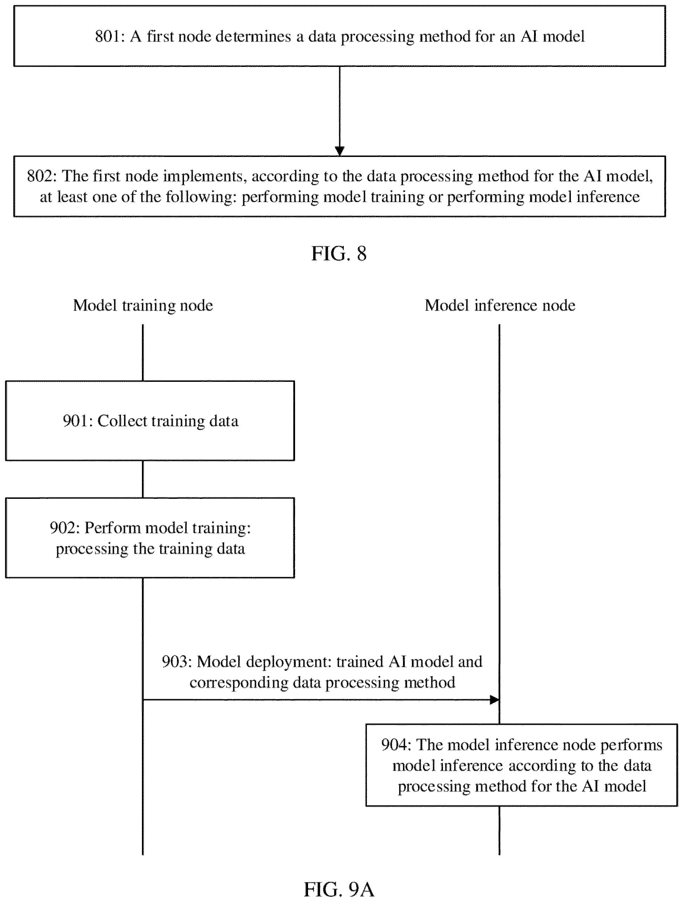

As shown in FIG. 8, a procedure of a data processing method for a model is provided. The method is performed by a model training node or a model inference node. It may be understood that the model training node and the model inference node may be a same node, different nodes, or the like. This is not limited. The procedure includes at least the following steps.

Step 801: A first node determines a data processing method for an AI model.

The first node is a model training node, a model inference node, or the like. For example, the first node receives indication information from another node (for example, a second node), where the indication information indicates the data processing method for the AI model. Alternatively, the first node determines the data processing method for the AI model as defined in a protocol. Alternatively, the first node determines the data processing method for the AI model. For example, the model inference node may determine the data processing method for the AI model or the like based on a format of collected training data, a format of a to-be-trained AI model, and the like. For details, refer to the following descriptions.

Step 802: The first node implements, according to the data processing method for the AI model, at least one of the following: performing model training or performing model inference.

As shown in FIG. 9A, an example in which a model training node and a model inference node are separately deployed, and the model training node indicates a data processing method for an AI model to the model inference node is used to provide a procedure of the data processing method. The procedure includes at least the following steps.

Step 901: Collect training data.

In this application, an entity that collects the training data may be the model training node, another AI entity, an AI module, or the like. In this application, the collected training data includes but is not limited to data in a wireless network, for example, radio channel information, a received signal, a reference signal, and reference signal received power (reference signal received power, RSRP). The radio channel information may include an estimated channel response, a channel feature, or the like. A direct acquirer (or referred to as an estimator, a measurer, a collector, or the like) of the data may be UE or a base station. When the entity or module that collects the data is different from the direct acquirer of the data, the direct acquirer of the data sends the data to the entity or module that collects the data. The collected training data may include measurement data of different UEs or measurement data collected by the UE in different geographical locations and different channel environments. The collected data may be real data obtained by the UE or the base station in an actual network, or may be virtual data generated by using an emulation platform or a simulation platform, or the like. This is not limited.

An objective of this application is to train an AI model that adapts to a plurality of radio resource configurations. Therefore, the collected training data includes data in a plurality of radio resource configurations. For example, the collected training data includes received signals or radio channel information in a plurality of bandwidths or a plurality of reference signal patterns. The data in the plurality of radio resource configurations may alternatively be generated by using a data enhancement method for data in a same radio resource configuration. For example, radio channels in a same bandwidth are truncated into radio channels in different bandwidths.

Optionally, in this application, a specific type of the collected training data is related to a function of the AI model. For example, for an AI model for frequency-domain channel estimation, training data required by the AI model includes at least a received reference signal Y and an original reference signal S. For the AI model, reference signals Y and original reference signals S in various radio resource configurations may be collected as training data. For example, reference signals Y and original reference signals S in different bandwidths and/or of different reference signal types may be collected.

For another example, for an AI model used for channel state information (channel state information, CSI) feedback, training data required by the AI model includes at least a channel response H or a channel feature W, and channel responses H or channel features W in different bandwidths and/or different antenna port quantities may be collected.

For another example, for an AI model used for beam management, training data required by the AI model includes at least a channel response H, a received signal Y, or RSRP of the received signal Y, and channel responses H, received signals Y, or RSRP in different bandwidths and/or different antenna port quantities may be collected.

For another example, for a positioning-related AI model, training data required by the AI model includes at least a channel response H, and channel responses H in different bandwidths and/or different antenna port quantities may be collected.

Step 902: Perform model training, including processing the collected training data.

In this application, because the training data collected in the foregoing data collection phase includes a plurality of formats, in a model training phase, the collected training data needs to be processed to unify formats of the training data.

To distinguish input data and output data of the AI model in an AI model inference phase, input data of the AI model in the AI model training phase is referred to as input training data, and output data of the AI model in the AI model training phase is referred to as output training data. Further, in this application, a process of processing the training data is involved. Therefore, originally collected training data (namely, original data), namely, the training data before processing, may be referred to as first input training data, and processed training data may be referred to as second input training data. The second input training data may be used as input training data of the AI model. Output data of the AI model is referred to as first output training data, and data obtained after the output data of the AI model is processed is referred to as second output training data, or referred to as target data.

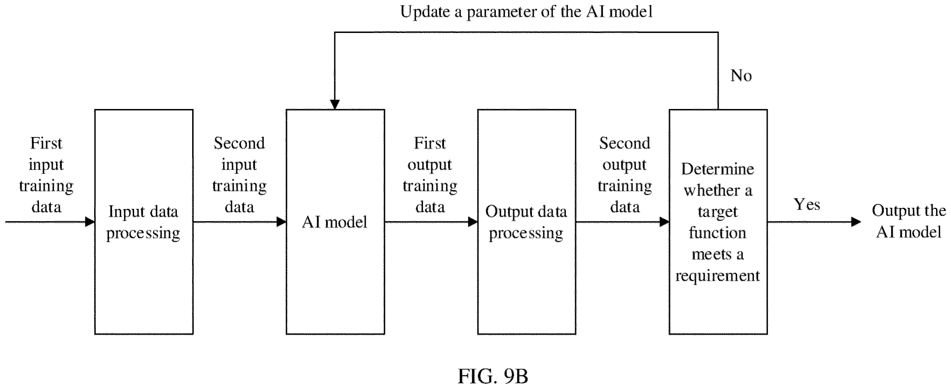

For example, the data processing method in this application includes at least one of the following: an input data processing method or an output data processing method. As shown in FIG. 9B, the model training node may perform input data processing on the collected first input training data to obtain the second input training data; obtain the first output training data based on the second input training data and the AI model; perform output data processing on the first output training data to obtain the second output training data; and determine, based on the second output training data, whether a target function meets a requirement. If the target function meets the requirement, the AI model is output, and training for the AI model is completed. Alternatively, if the target function does not meet the requirement, a parameter of the AI model is updated, and training for the AI model continues. The target function may alternatively be referred to as a loss function. For example, the AI model is a neural network. In this case, the adjusted parameter may include one or more of the following: a quantity of layers of the neural network, a width of the neural network, a connection relationship between layers, a weight value of a neuron, an activation function of the neuron, an offset in the activation function, or the like. Supervised learning may be used in the foregoing training process. The model training node may determine a value of the loss function based on the second output training data and a corresponding label. If the value of the loss function is less than a threshold or meets a target requirement, the training for the AI model ends. Alternatively, if the value of the loss function is not less than a threshold or does not meet a target requirement, the training for the AI model continues. Different from that in supervised learning, in an unsupervised learning process, there is no label. In this case, the model training node may determine the value of the loss function based on the second output training data. In supervised learning and unsupervised learning, the loss function has different designs. It may be understood that, in the model training process, another model training method, for example, reinforcement learning, may be alternatively used. This is not limited.

For example, a process in which the model training node performs input data processing on the first input training data includes: determining an input format and an output format of the AI model; and processing the first input training data based on the input format of the AI model, to obtain the second input training data. Optionally, a format of the second input training data is the same as the input format of the AI model. The first output training data is determined based on the second input training data and the AI model. Optionally, a format of the first output training data is the same as the output format of the AI model. A process of performing output data processing on the first output training data includes: processing the first output training data to obtain the second output training data. For example, processing may be performed on the first output training data based on a format of a label in the training data, to obtain the second output training data. Optionally, a format of the second output training data is the same as a format of a corresponding label. Alternatively, in an unsupervised learning scenario, there is no label in the training data. In this case, processing may be performed on the first output training data based on a radio resource configuration, to obtain the second output training data, where the second output training data meets a configuration of a corresponding radio resource. Alternatively, the first output training data is processed based on the loss function of the AI model, to obtain the second output training data and the like. For example, in the radio resource configuration, the AI model needs to feed back channel state information whose length is B bits. In this case, a length of the first output training data output by the AI model is truncated into the length of B bits. A parameter of the AI model is adjusted based on the second output training data. For example, supervised learning is used as an example. The model training node may calculate the value of the loss function based on the second output training data and the label in the training data. If the value of the loss function is less than the threshold or meets the target requirement, the training for the AI model is completed. Alternatively, if the value of the loss function is not less than the threshold or does not meet the target requirement, the parameter of the AI model is adjusted, and the training for the AI model continues.

It should be understood that the foregoing process of processing the first input training data and the process of processing the first output training data do not necessarily need to be performed. The collected training data includes a plurality of formats. Therefore, for input training data in a specific format, if the format of the input training data is the same as the input format of the AI model, the input training data in the format may be directly input to the AI model, and the input training data no longer needs to be processed. In other words, the first input training data may not be processed, and the first output training data is directly determined based on the first input training data and the AI model. Similarly, an output of a first AI model is referred to as first output training data. If a format of the first output training data meets a requirement, for example, is the same as the format of the label, or meets a format of the radio resource configuration, the first output training data may no longer be further processed.

In this application, the input format and the output format of the AI model may be related to the radio resource configuration. For example, the input data of the AI model is padded, and the output data of the AI model is truncated. A length of the input data of the AI model may be greater than or equal to a length of a training sample with a longest length in all potential radio resource configurations in an application scenario of the AI model, a length of the output data of the AI model may be greater than or equal to a length of a label with a longest length in all the potential radio resource configurations in the application scenario of the AI model, and the like.

It should be noted that, in the descriptions of this application, the format may include two meanings such as a dimension and/or a length. In radio signal processing, usually, an object that needs to be processed is a radio signal, a radio channel, or the like. Dimensions of the radio signal or the radio channel usually include dimensions such as a time domain, a frequency domain, and/or a space frequency. In this application, a dimension of originally collected first input training data may be transformed, so that the dimension meets an input dimension requirement of the AI model, and/or a length of a signal in each dimension is processed, so that the length meets a requirement of the input of the AI model for a length in each dimension. In the descriptions of this application, a process of processing the length of the input data and the length of the output data is mainly described, and processing a length of one-dimensional data is used as an example. In subsequent descriptions, unless otherwise specified, a described length is the length of the one-dimensional data. A manner of processing a length of the multi-dimensional data may be obtained by directly extending a manner of processing the length of the one-dimensional data.

Step 903: The model training node sends the AI model and indication information to the model inference node, where the indication information indicates the data processing method for the AI model, and the data processing method for the AI model may alternatively be referred to as an AI model usage method.

In this application, when the model training node is different from the model inference node, model deployment needs to be performed. To be specific, the model training node needs to send a trained AI model to the model inference node. For example, the model training node may send information about the AI model to the model inference node. The information about the AI model includes at least one of the following: a parameter of the model, an input format of the model, an output format of the model, or the like. A neural network is used as an example. The parameter of the model includes at least one of the following: a quantity of layers of the neural network, a width of the neural network, a connection relationship between layers, a weight of a neuron, an activation function of the neuron, an offset in the activation function, or the like. The model inference node restores or determines the AI model based on the information about the AI model.

Further, in this application, the AI model usage method (namely, the data processing method for the AI model) may be further indicated to the model inference node, to enable the model inference node to correctly use the AI model to complete an inference task. Alternatively, the AI model usage method may be predefined. A manner of obtaining the AI model usage method by the model inference node is not limited in this application.

In this application, the data processing method for the AI model includes at least one of the following: an input data processing method or an output data processing method. The input data processing method includes at least one of the following: a data padding method or a data truncating method. The output data processing method includes at least one of the following: a data padding method or a data truncating method. The data padding method includes at least one of the following: a padding rule (or referred to as a padding location, namely, a specific location at which data of a specific length is padded), a length obtained after padding, and a padding data type (namely, a padding value). The data truncating method includes at least one of the following: a truncating rule (or referred to as a truncating location, namely, a specific location at which data of a specific length is truncated), or a length obtained after truncating.

In this application, a plurality of data processing methods may be predetermined, and the model training node may indicate one of the plurality of data processing methods to the model inference node. For example, n data processing methods are predefined, and the n data processing methods correspond to different indexes. The model training node may specifically indicate an index of a specific data processing method to the model inference node. Alternatively, the model training node may directly indicate, to the model inference node, a parameter corresponding to a data processing method, for example, a padding value and a padding location for the input data, and/or a truncating location for the output data.

Step 904: The model inference node performs model inference according to the data processing method for the AI model.

In this application, the model inference node may perform model inference according to the data processing method that is for the AI model and that is indicated by the model training node, to complete inference tasks for different radio resource configurations. In other words, the model inference node processes data during model inference by using a rule the same as that of the training data processing method.

For ease of description, in a model inference phase, initial input data is referred to as first input data or original data, and input data that is of the AI model and that is obtained after the first input data is processed is referred to as second input data. Output data of the AI model is referred to as first output data. Data obtained after the first output data is processed is referred to as second output data or target data.

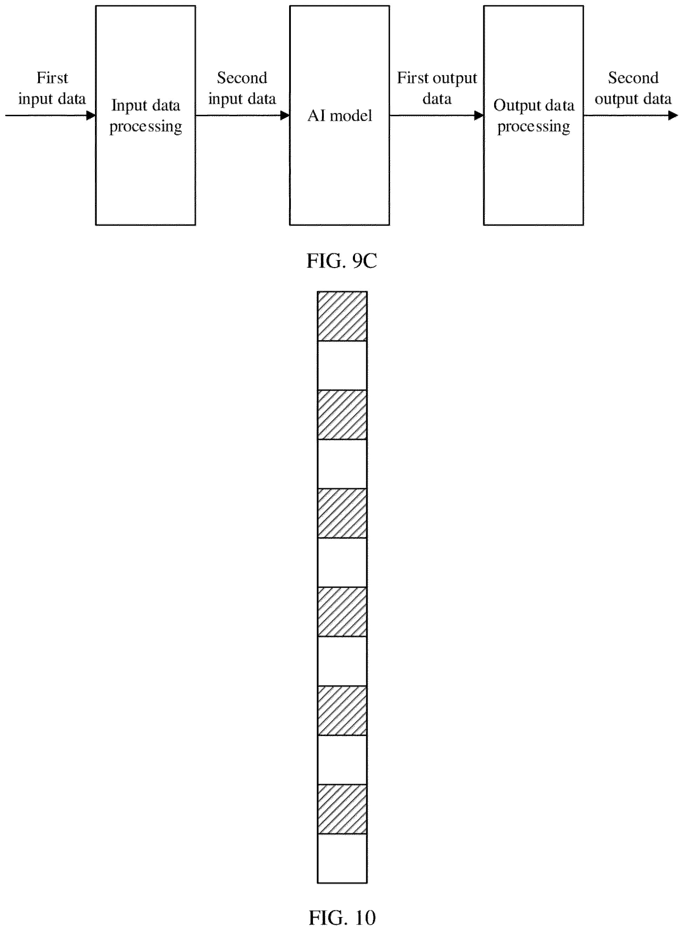

In a design, the data processing method that is for the AI model and that is indicated by the model inference node includes at least one of the following: an input data processing method or an output data processing method. The input data processing method is the same as or corresponds to the input training data processing method in the model training phase. The output data processing method is the same as or corresponds to the output training data processing method in the model inference phase. For example, as shown in FIG. 9C, the model inference node may process the first input data according to the input data processing method in the data processing method for the AI model, to obtain the second input data. A format of the second input data is the same as a format of the AI model. The first output data is determined based on the second input data and the AI model. A format of the first output data is the same as an output format of the AI model. The first output data is processed based on the output data processing method in the data processing method for the AI model, to determine the second output data. The second output data may be considered as an inference result of the AI model.

Similar to the foregoing training process, a process in which the model inference node processes the first input data to determine the second input data and a process in which the model inference node processes the first output data to obtain the second output data are not necessarily performed, and may alternatively not be performed. For example, if the first input data matches an input format of the AI model, or is the same as a length of padded data indicated in the input data processing method, the first input data may no longer be processed, and the first input data may be directly used as the input data of the AI model. If the output data of the AI model meets a length of the radio resource configuration, or is the same as a length of a corresponding label, or the output data of the AI model is the same as a length of data after truncating indicated in the output data processing method, or the like, the first output data does not need to be processed, and the first output data may be directly used as an inference result of the AI inference, or the like.

In the foregoing design, inference tasks for different radio resource configurations can be completed by using one AI model, and there is no need to train and deploy one AI model for each radio resource configuration, thereby reducing overheads for training and storage, and the like.

As described above, the data processing method for the AI model includes at least one of the following: an input data processing method for the AI model, or an output data processing method for the AI model. In a design, a process in which the input data processing method for the AI model is an input data padding method, and the output data processing method for the AI model is an output data truncating method is mainly described. Alternatively, it may be described as the following: The data processing method for the AI model includes at least one of the following: an input data padding method for the AI model or an output data truncating method for the AI model.

In this design, a process in which the model training node performs model training according to the data processing method for the AI model includes: The model training node pads first input training data according to the input data padding method, to obtain second input training data; determines first output training data based on the second input training data and the AI model; and truncates the first output training data according to the output data truncating method, to obtain second output training data. Parameter adjustment is performed on the AI model based on the second output training data.

The input data padding method may include at least one of the following items:

a length of padded data, where if this item is not configured, a length of padded input training data is the same as a length of the input data of the AI model by default, that is, matches the input format of the AI model;

a padding data type, where, for example, the padding data may be 0, or may be an extremely large positive number or an extremely small negative number; or

a data padding rule, where, for example, padding is performed in the front of, in the rear of, in the middle of, or on two sides of input training data, at equal intervals, or at unequal intervals.

The output data truncating method may include at least one of the following items:

a length of data after truncating, where if this item is not configured, a length of truncated output data is the same as a length of a label by default, that is, matches a format of the label; or

a data truncating rule, where, for example, truncating is performed in the front of, in the rear of, in the middle of, or on two sides of output data, at equal intervals, or at unequal intervals.

For example, the model training node may collect sufficient training data. Supervised learning is used as an example. The training data includes a training sample and a label. The training sample may alternatively be referred to as first input training data, and the first input training data may be data that needs to be input to the AI model for model training. The length of the input data of the AI model and the length of the output data of the AI model are determined. The length of the input data of the AI model is greater than or equal to a length of a training sample with a longest length in training samples of the collected training data; and the length of the output data of the AI model is greater than or equal to a length of a label with a longest length in labels of the collected training data. In other words, the length of the input data of the AI model is greater than or equal to a length of original data with a longest length in all potential radio resource configurations in an application scenario of the AI model, and the length of the output data of the AI model is greater than or equal to a length of target data with a longest length in all the potential radio resource configurations in the application scenario of the AI model. The model training node pads the first input training data according to the input data processing method, to obtain the second input training data. The second input training data may be referred to as padded first input training data, and a length of the second input training data is the same as the length of the input data of the AI model. Specifically, padding may be performed on the input training data based on the type of the padding data, the data padding rule, and the like in the input data padding method. For example, a frequency-domain length of the input data of the AI model is 8 RBs, and a frequency-domain length of the first input training data is 4 RBs. In this application, the frequency-domain length of the first input training data may be padded from 4 RBs to 8 RBs. A specific process of padding the frequency-domain length of the first input training data from 4 RBs to 8 RBs may be determined based on the padding data type (for example, a specific padding value) and the data padding rule (for example, padding in the front, padding in the rear, or padding at equal intervals) in the input data padding method. The first output training data is determined based on the second input training data and the AI model. The first output training data is truncated according to the output data truncating method, to obtain second output training data. For example, a length of the second output training data is equal to a length of a label. Specifically, how to truncate the first output training data may be determined based on the truncating rule in the output data truncating method. For example, truncating is performed in the front or rear of the first output training data, or at equal intervals. Parameter adjustment is performed on the AI model based on the second output training data. For example, in this application, a value of a loss function may be calculated based on the second output training data and the label. If the value of the loss function is less than the threshold or meets the target requirement, the training for the AI model is completed. Alternatively, if the value of the loss function is not less than the threshold or does not meet the target requirement, the parameter of the AI model is adjusted, and the training for the AI model continues.

In this application, the model training node may send the trained AI model to the model inference node. The model inference node may perform data inference on the AI model according to the data processing method for the AI model. In this design, a process in which the model inference node performs model inference based on the data processing method for the AI model includes:

padding first input data according to the input data padding method, to obtain second input data; determining first output data based on the second input data and the AI model; and truncating the first output data according to the output data truncating method, where the truncating may alternatively be referred to as extraction, truncated first output data may be referred to as second output data, and the second output data is an inference result of the AI model.

Optionally, a process of padding the input data and truncating the output data in the model inference process is the same as a process of padding the input training data and truncating the output training data in the model training phase.

A frequency-domain channel estimation scenario is used as an example, to describe channel estimation in different bandwidths and different reference signal patterns by using a same AI model. In this scenario, the input data of the AI model is padded, and the output data of the AI model is truncated.

For ease of understanding, a channel estimation process is first described. A propagation model of a radio signal with a single-UE single-antenna single orthogonal frequency division multiplexing (orthogonal frequency division multiplexing, OFDM) symbol is $Y = H \cdot S + n$. Y represents a received signal; S represents a sent signal, and S represents a reference signal in a channel estimation scenario; H represents a frequency-domain channel (response) of a resource element (resource element, RE) on which the reference signal is located; n represents noise; and $\cdot$ represents element multiplication, that is, multiplying elements with a same index in two vectors or matrices. A length of each of Y, H, and S is L, and L is a quantity of REs occupied by the reference signal. A channel estimation process is as follows: A frequency-domain channel response H is estimated by using the received signal Y and the reference signal S. H represents channels on all REs within a scheduled bandwidth, and $\overline{H}$ is a part of H. In this scenario, in the model training process and the model inference process, the input data of the AI model is the received signal Y and the reference signal S, where the reference signal S is known; and the output data of the AI model is the frequency-domain channel response H.

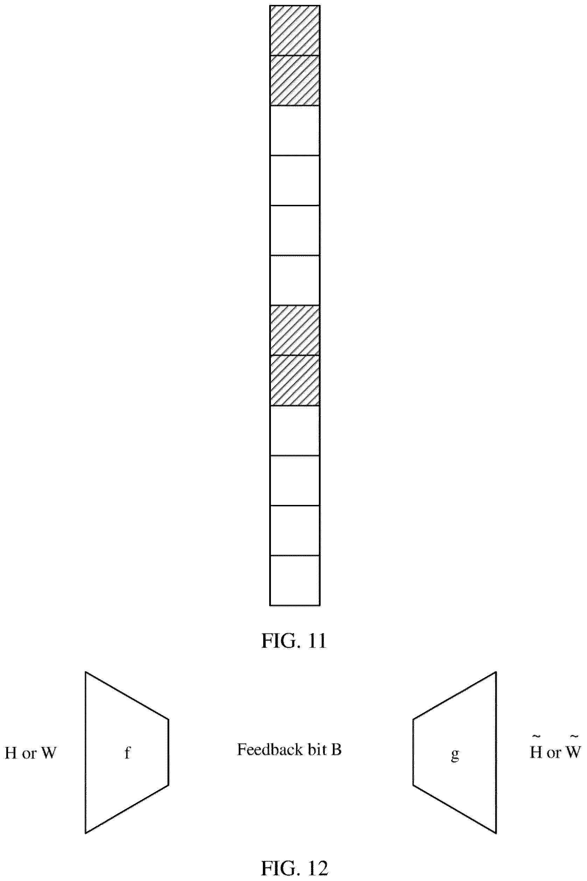

In this application, bandwidths of frequency-domain channels scheduled by the base station may be different. For example, the bandwidth of the frequency-domain channel scheduled by the base station may be four resource blocks (resource blocks, RB), 8 RBs, 16 RBs, or the like. For a same scheduled bandwidth, the UE may send reference signals of different types, for example, a type-1 reference signal and a type-2 reference signal, to the base station. In this application, a length of H depends on the scheduled bandwidth, and the length of each of Y, $\overline{H}$, and S depends on the scheduled bandwidth and the reference signal pattern. For example, the bandwidth scheduled by the base station is set to k RBs. Because one RB includes 12 REs, the length of H is 12k. As shown in FIG. 10, the type-1 reference signal occupies 1 RE at an interval of 1 RE, and therefore, the type-1 reference signal occupies 6 REs in each RB. As shown in FIG. 11, the type-2 reference signal occupies 2 REs at an interval of 4 REs, and therefore, the type-2 reference signal occupies 4 REs in each RB. When the scheduled bandwidth is k RBs, a length of each of Y, $\overline{H}$, and S of the type-1 reference signal is 6k, and a length of each of Y, $\overline{H}$, and S of the type-2 reference signal is 4k.

If frequency-domain channel estimation is performed in an AI manner, the input data of the AI model is Y and S. The length of each of Y and S of the type-1 reference signal is 6k, and the length of each of Y and S of the type-2 reference signal is 4k, where k is a frequency-domain channel bandwidth scheduled by the base station. It can be learned that during AI model design, AI models need to be separately designed based on different scheduled bandwidths and different types of reference signals. In this design, an AI model is designed, and the AI may be applicable to channel estimation in different scheduled bandwidths and different types of reference signals, thereby reducing overheads for AI model training and storage.

Subsequently, a channel estimation process is described in terms of training data collection, training data processing, model training, model deployment, model inference, and the like.

Training data collection.

A training dataset is determined based on the application scenario of the AI model. The training dataset may include training data in all possible radio resource configurations in the application scenario as much as possible, to enable the AI model to achieve good performance in various radio resource configurations. Each piece of training data includes a training sample and a label. The training sample may alternatively be referred to as the first input training data, and includes a received signal Y and an original signal S. The label is a frequency-domain channel response H. For example, if an AI model is expected to be trained, channel estimation may be performed on the type-1 reference signal and the type-2 reference signal in bandwidths whose scheduled bandwidths are 4 RBs and 8 RBs. In this case, the training data includes training data corresponding to the type-1 reference signal and training data corresponding to the type-2 reference signal in the scheduled bandwidth of 4 RBs, and training data corresponding to the type-1 reference signal and training data corresponding to the type-2 reference signal in the scheduled bandwidth of 8 RBs. Each piece of training data includes the training samples (Y, S) and the label (H).

Training data processing.

The training data processing includes padding the first input training data, where the padded input training data is referred to as the second input training data, and the length of the second input training data is the same as the length of the input data of the AI model. The first output training data is determined based on the second input training data and the AI model. The first output training data is truncated, to determine the second output training data, where the length of the second output training data is the same as the length of the label.

In this application, a process of padding the first input training data includes the following. First, for different types of reference signals, padding may be performed based on patterns of the reference signals, and Y and S are padded to have a length the same as that of H. After padding, real values of Y and S are only at a location corresponding to a RE in which the reference signal is located, and padding values are at a remaining RE location. Then, padded Y and padded S are padded again based on the length of the input data of the AI model, namely, a frequency-domain bandwidth supported by the AI model. A padding rule of this time may be one or more of padding in the front, padding in the rear, padding in the middle, padding on two sides, or the like. This is not limited. The padding value may be 0, or an extremely large positive number, or an extremely small negative number. A length of padded data, namely, the length of the second input training data, is the same as the length of the input data of the AI model.

For example, the training samples in the collected training data, namely, the first input training data, include:

a received signal $Y^1 = [y_1^1, y_2^1, ..., y_{24}^1]$ corresponding to the type-1 reference signal in the scheduled bandwidth of 4 RBs, where $Y^i$ represents a received signal Y whose number is i, and $y_j^i$ represents a $j^{th}$ element in the received signal Y whose number is i;

a received signal $Y^2 = [y_1^2, y_2^2, ..., y_{16}^2]$ corresponding to the type-2 reference signal in the scheduled bandwidth of 4 RBs;

a received signal $Y^3 = [y_1^3, y_2^3, ..., y_{48}^3]$ corresponding to the type-1 reference signal in the scheduled bandwidth of 8 RBs; and

a received signal $Y^4 = [y_1^4, y_2^4, ..., y_{32}^4]$ corresponding to the type-2 reference signal in the scheduled bandwidth of 8 RBs.

The first input training data is padded, where padding data may be 0, and a length of padded input training data is 96 REs. Optionally, in the training scenario, because a maximum scheduled bandwidth is 8 RBs, namely, 96 REs, it may be considered that the length of the input data of the AI model is designed as 96 REs. In this application, a length of the training sample in the training data is padded to be the same as the length 96 REs of the input data of the AI model.

In this application, Y of each of different types of reference signals may be first padded to have a length the same as that of the label H, and then Y is padded again. Specifically, padding may be performed after Y Pieces of the padded first input training data, namely, pieces of the second input training data, are respectively as follows:

$Y^1 = [y_1^1, 0, y_2^1, 0, ..., y_{24}^1, 0, 0, 0, ..., 0]$ obtained after $Y^1$ corresponding to the type-1 reference signal in the scheduled bandwidth of 4 RBs is padded;

$Y^{12} = [y_1^2, y_2^2, 0, 0, 0, 0, y_3^2, y_4^2, 0, 0, 0, 0, ..., y_{23}^2, y_{24}^2, 0, 0, 0, ..., 0]$ obtained after $Y^1$ corresponding to the type-2 reference signal in the scheduled bandwidth of 4 RBs is padded;

$Y^3 = [y_1^3, 0, y_2^3, 0, ..., y_{48}^3, 0]$ obtained after $Y^3$ corresponding to the type-1 reference signal in the scheduled bandwidth of 8 RBs is padded; and

$Y^4 = [y_1^4, y_2^4, 0, 0, 0, 0, y_3^4, y_4^4, 0, 0, 0, 0, ..., y_{31}^4, y_{32}^4, 0, 0, 0, 0]$ obtained after $Y^4$ corresponding to the type-2 reference signal in the scheduled bandwidth of 8 RBs is padded.

A method for padding S is similar to the foregoing method for padding Y. Padded S and padded Y may be referred to as the second input training data. The padded Y and the padded S are input to the AI model. An output of the AI model is referred to as the first output training data, and a length of the first output training data is the same as the length of the output data of the AI model. The first output training data is truncated. Truncated output training data may be referred to as the second output training data, and a length of the second output training data is the same as the length of the label (the frequency-domain channel response H). A truncating rule for the first output data may be one or more of truncating in the front, truncating in the rear, truncating in the middle, truncating on two sides, and the like. This is not limited. Optionally, the truncating rule may be independent of the padding rule, or may match the padding rule. For example, if the first input training data is padded in the rear of the first input training data, the first output training data is truncated in the front of the first output training data.

For example, it is assumed that the length of the output data of the AI model is 96 REs, and the length of the label (the frequency-domain channel response H) of the AI model is 48 RBs in the scheduled bandwidth of 4 RBs. In this case, the first 48 elements in the output data of the AI model may be truncated, to be compared with the label H of 4 RBs. In the scheduled bandwidth of 8 RBs, the output data of the AI model does not need to be truncated, and the output data of the AI model may be directly compared with the label H of 8 RBs, or the like.

Model training.

In a model training process, the model training node may determine a structure of the AI model, and the structure includes an input format and an output format of the AI model. A length of input data in the input format of the AI model is greater than or equal to a length of a training sample with a longest length in the training data. A length of output data in the output format of the AI model is greater than or equal to a length of a label with a longest length in the training data. The AI model is trained by using training data obtained after the foregoing collected training data that includes a plurality of bandwidths and different types of reference signals is processed. In the training process of the AI model, the training sample, namely, the first input training data, is padded. A length of padded input training data is the same as the length of the input data of the AI model. The first output training data of the AI model is truncated, and a length of truncated output training data is the same as a length of a corresponding label. The model training node may determine a value of a loss function based on the second output training data and a label. If the value of the loss function is less than a threshold or meets a target requirement, the training for the AI model is completed. Alternatively, if the value of the loss function is not less than a threshold or does not meet a target requirement, a parameter of the AI model is adjusted, and the training for the AI model continues.

Model deployment.

In this application, the model training node needs to send a trained AI model to the model inference node, and further needs to indicate the data processing method for the AI model to the model inference node, to enable the model inference node to correctly use a same AI model to complete channel estimation tasks in different bandwidths and different types of reference signals. For example, the model deployment host may send indication information to the model inference node, where the indication information indicates the data processing method for the AI model, and the indication information may indicate the input data padding rule, the output data truncating rule, and the like.

Model inference.

The model inference node performs model inference according to the data processing method that is for the AI model and that is indicated by the model training node, to complete channel estimation tasks in different bandwidths and different types of reference signals. For example, the input data is padded by using a padding rule the same as that in the model training process, and the output data is truncated by using a truncating rule the same as that in the model training process.

In this application, frequency-domain channel estimation is used as an example, to describe a process of performing channel estimation by using the AI model. It should be understood that channel estimation further includes another scenario. In each scenario, the input data and the output data are different. For example, in a scenario in which further channel estimation needs to be performed on a channel roughly estimated by using a conventional method, the input data is a noise-including channel on an RE occupied by a reference signal, and the output data is channels on all REs within a scheduled bandwidth. The input data needs to be padded, and the output data needs to be truncated, to obtain an inference result. For another example, in a scenario of delay-domain channel estimation, the input data is a received signal and a reference signal, and the output data is a delay-domain channel. The input data needs to be padded, data truncating does not need to be performed on the output data, and the like.

In this application, the input data of the AI model is padded, and the output data of the AI model is truncated, so that channel estimation tasks in a case of a plurality of bandwidths and different reference signal patterns can be completed by using one AI model.

A CSI feedback scenario is used as an example, to describe CSI feedback performed in different bandwidths and/or different antenna ports (channel feature lengths) by using a same AI model. In this scenario, the input data of the AI model is padded, and the output data of the AI model is truncated.

For ease of understanding, an AI-based CSI feedback procedure is first described, as shown in FIG. 12.

The UE obtains a downlink channel response H or feature information W of a downlink channel. A first sub-model is deployed in the UE, and the first sub-model may be referred to as a sub-model f. The downlink channel response H or the feature information W of the downlink channel is used as an input of the sub-model f, and an output of the sub-model f is a feedback bit B corresponding to CSI. The feedback bit B is sent to the base station. A second sub-model is deployed in the base station, and the second sub-model may be referred to as a sub-model g. The feedback bit B is used as an input of the sub-model g, and an output of the sub-model g is restored downlink channel $\tilde{H}$ or restored feature information $\tilde{W}$ of the downlink channel.

Dimensions of the downlink channel response H are a bandwidth*an antenna port quantity, where the antenna ports include a base station antenna port and/or a UE antenna port. The bandwidth configured by the base station for CSI feedback may be different, for example, may be 4 RBs or 8 RBs. A granularity of 1 RB is used as an example. In this case, a length of the downlink channel in a bandwidth dimension may be 4 or 8. The antenna port quantity configured by the base station for the CSI feedback may be different, for example, may be 16 ports or 32 ports. In this case, a length of the downlink channel in an antenna port dimension may be 4 or 8.

Dimensions of the feature information W of the downlink channel are a quantity of sub-bands*an eigenvector length (an antenna port quantity of the base station). The quantity of sub-bands configured by the base station may be different, for example, may be 6 sub-bands or 12 sub-bands. In this case, a length of the downlink channel in a feature information sub-band dimension may be 6 or 12. The eigenvector length configured by the base station for the CSI feedback may be different, for example, may be 16 or 32. In this case, a length of the downlink channel in a feature information eigenvector dimension may be 16 or 32.

The feature information W of the downlink channel is obtained through calculation based on the downlink channel response H. A specific calculation method is as follows.

A covariance matrix $R_{UU}$ is calculated for a downlink channel response H of each sub-band, and

$$R_{UU} = \sum_{i=0}^{i=M-1} H_i^H H_i$$

, where $H_i$ is a channel in an $i^{th}$ unit bandwidth, and M is a sub-band granularity, namely, a quantity of unit bandwidths included in each sub-band. For example, if the unit bandwidth is an RB, $H_i$ is a channel in an $i^{th}$ RB; and if the sub-band granularity is 4 RBs, M is equal to 4.

Eigenvalue decomposition is performed on the covariance matrix of each sub-band, and $[\lambda \ \tilde{V}]$ = EVD($R_{UU}$), where $\lambda$ includes at least one eigenvalue of $R_{UU}$, and $\tilde{V}$ is a matrix including eigenvectors that correspond to all eigenvalues. An eigenvector $V_m$ corresponding to a maximum eigenvalue is an eigenvector of a channel of the sub-band. Eigenvectors of all sub-bands are sequentially combined into a matrix, namely, an eigenvector matrix V of the downlink channel, which may alternatively be referred to as the feature information W of the downlink channel.

Optionally, the feature matrix V of the downlink channel may be further processed, and projected to sparser space. For example, two groups of DFT bases, which are respectively a space-domain base S and a frequency-domain base F, are generated by using a discrete Fourier transform (discrete Fourier transform, DFT) formula. For space-frequency joint projection, refer to the following formula: C = $S^H$ ∗ V ∗ F, where $S^H$ is a conjugate transpose matrix of S. C obtained after the projection may alternatively be referred to as the feature information W of the downlink channel. After the projection, a sub-band dimension of V is converted into a delay dimension, and an eigenvector (the antenna port of the base station) dimension of V is converted into a beam (angle) dimension, but lengths of the dimensions remain unchanged. Therefore, regardless of whether the feature information W of the downlink channel is obtained before or after the projection, the dimensions of the feature information W of the downlink channel are described as the quantity of sub-bands*the eigenvector length (the antenna port quantity of the base station).

Training data collection.

In this scenario, both the training sample and the label are the downlink channel response H or the feature information W of the downlink channel. The training data may include the downlink channel response H or the feature information W of the downlink channel in different dimensions. Specific dimensions are shown above.

Training data processing.

The training data processing includes padding the first input training data, where the padded input training data is referred to as the second input training data, and the length of the second input training data is the same as the length of the input data of the AI model. The first output training data is determined based on the second input training data and the AI model. The first output training data is truncated, to determine the second output training data, where the length of the second output training data is the same as the length of the label.

In this embodiment, if the first input training data is the downlink channel response H, the downlink channel response H needs to be padded in the bandwidth dimension and/or the antenna port dimension. If the first input training data is the feature information W of the downlink channel, the feature information W of the downlink channel needs to be padded in the sub-band dimension and/or the eigenvector dimension, to obtain the second input training data, where the length of the second input training data is the same as the length of the input data of the AI model. The first output training data is determined based on the second input training data and the AI model. If the label is the downlink channel response H, the first output training data needs to be truncated in the bandwidth dimension and/or the antenna port dimension. If the label is the feature information W of the downlink channel, the first output training data needs to be truncated in the sub-band dimension and/or the eigenvector dimension, to obtain the second output training data, where the length of the second output training data is the same as the length of the label.

A specific padding method and a specific truncating method are similar to those in the foregoing embodiment. Details are not described again.

Model training.

In a model training process, the model training node may determine a structure of the AI model, and the structure includes an input format and an output format of the AI model. A length of input data in the input format of the AI model is greater than or equal to a length of a training sample with a longest length in the training data. A length of output data in the output format of the AI model is greater than or equal to a length of a label with a longest length in the training data. The AI model is trained by using training data obtained after the foregoing collected original training data that includes a plurality of bandwidths and/or a plurality of antenna port quantities is processed, or by using training data obtained after the foregoing collected original training data that includes a plurality of quantities of sub-bands and/or a plurality of eigenvector lengths is processed. In the training process of the AI model, the training sample, namely, the first input training data, is padded. A length of padded input training data is the same as the length of the input data of the AI model. The first output training data of the AI model is truncated, and a length of truncated output training data is the same as a length of a corresponding label. The model training node may determine a value of a loss function based on the second output training data and a label. If the value of the loss function is less than a threshold or meets a target requirement, the training for the AI model is completed. Alternatively, if the value of the loss function is not less than a threshold or does not meet a target requirement, a parameter of the AI model is adjusted, and the training for the AI model continues.

Model deployment.

In this application, the model training node needs to send a trained AI model to the model inference node, and further needs to indicate the data processing method for the AI model to the model inference node, to enable the model inference node to correctly use a same AI model to complete CSI feedback tasks in different bandwidths and/or different antenna port quantities, or to enable the model inference node to use a same AI model to complete CSI feedback tasks in different quantities of sub-bands and/or different eigenvector lengths. For example, the model deployment host may send indication information to the model inference node, where the indication information indicates the data processing method for the AI model, and the indication information may indicate the input data padding rule, the output data truncating rule, and the like.

Model inference.

The model inference node performs model inference according to the data processing method that is for the AI model and that is indicated by the model training node, to complete CSI feedback tasks in different bandwidths and/or different antenna port quantities, or to complete CSI feedback tasks in different quantities of sub-bands and/or different eigenvector lengths. For example, the input data is padded by using a padding rule the same as that in the model training process, and the output data is truncated by using a truncating rule the same as that in the model training process.

In the CSI feedback scenario, the input data processing method for the AI model may further indicate whether the input data of the AI model is the downlink channel or the feature information of the downlink channel, whether the feature information of the downlink channel is the feature matrix of the downlink channel or the feature matrix obtained after the sparse projection, and the like. The output data processing method for the AI model may further indicate whether the output data of the AI model is the downlink channel or the feature information of the downlink channel, whether the feature information of the downlink channel is the feature matrix of the downlink channel or the feature matrix obtained after the sparse projection, and the like.

As described above, the data processing method for the AI model includes at least one of the following: an

**EP 4 443 835 A1**

input data processing method for the AI model, or an output data processing method for the AI model. In this design, that the input data processing method for the AI model is an input data truncating method, and the output data processing method for the AI model is an output data padding method is mainly described. Alternatively, it may be described as the following: The data processing method for the AI model includes at least one of the following: an input data truncating method for the AI model or an output data padding method for the AI model.

In this design, that the model training node performs model training according to the data processing method for the AI model includes: truncating first input training data according to the input data truncating method, to obtain second input training data; determining first output training data based on the second input training data and the AI model; padding the first output training data according to the output data padding method, to obtain second output training data; and performing parameter adjustment on the AI model based on the second output training data.

In this design, that the model inference node performs model inference according to the data processing method for the AI model includes: truncating first input data according to the input data truncating method, to obtain second input data; determining first output data based on the second input data and the AI model; and padding the first output data according to the output data padding method. Padded first output data may be referred to as second output data, and the second output data may be referred to as an inference result of the AI model.

In this design, the input data truncating method may include at least one of the following: a length obtained after truncating, or a data truncating rule. The output data padding method may include at least one of the following: a length obtained after padding, a padding data type, a data padding rule, or the like. For specific truncating and padding descriptions, refer to the foregoing design.

For example, if partial data in the input data is valid data, and a remaining part in the input data is invalid data, or energy of the input data is mainly concentrated in partial data, the input data may be truncated in the model inference process or the model training process. Input data of different lengths is truncated to have a unified length. A length of truncated input data is the same as the length of the input data of the AI model. Output data is determined based on the truncated input data and the AI model. Then, the output data of the AI model is padded.

A CSI feedback scenario is used as an example. When the feature information W of the downlink channel is a feature matrix obtained after sparse projection, W is sparse in an angle domain and/or a delay domain, that is, although dimensions of W are a quantity of sub-bands*an eigenvector length, values of most elements in the matrix are small, and total energy of the matrix is mainly concentrated on several angles and a delay path. In this case, the feature information W of the downlink channel may be truncated, and only several elements with large values are retained, to obtain the second input data. The first output data is determined based on the second input data and the AI model, and then the first output data is padded, to obtain the second output data, namely, the feature information $\tilde{W}$ of the downlink channel restored by using the AI model.

In the foregoing design, the input data is truncated and the output data is padded, so that task inference in different scenarios can be completed by using one AI model.

In another design, the AI model includes a first sub-model and a second sub-model. The data processing method for the AI model includes at least one of the following: performing data truncating on an output of the first sub-model, or performing data padding on an input of the second sub-model. Alternatively, it may be described as the following: The data processing method for the AI model includes at least one of the following: an output data truncating method for the AI model (for example, the first sub-model), or an input data padding method for the AI model (for example, the second sub-model).

In this design, that the model training node performs model training according to the data processing method for the AI model includes: determining first output training data of the first sub-model based on input training data of the first sub-model and the first sub-model; performing data truncating on the first output training data according to the output data truncating method, to obtain second output training data of the first sub-model, and obtain first input training data of the second sub-model based on the second output training data of the first sub-model; performing data padding on the first input training data of the second sub-model according to the input data padding method, to obtain second input training data; determining output training data of the second sub-model based on the second input training data and the second sub-model; and adjusting, based on the input training data of the first sub-model and the output training data of the second sub-model, at least one of the following: a model parameter of the first sub-model, or a model parameter of the second sub-model.

That the model inference node performs model inference according to the data processing method for the AI model includes: determining first output data of the first sub-model; and performing data truncating on the first output data according to the output data truncating method. That the model inference node performs model inference according to the data processing method for the AI model includes: padding first input data according to the input data padding method, to obtain second input data; and determining first output data based on the second input data and the second sub-model. For a specific input data padding method and a specific output data truncating method, refer to the descriptions of the foregoing design.

In this application, a model inference node of the first sub-model and a model inference node of the second sub-model may be a same node or different nodes. This is not limited. For example, in a downlink channel measurement scenario, the inference node of the first sub-model is UE, the inference node of the second sub-model is a base station, and the like. Alternatively, in an uplink channel measurement scenario, the inference node of the first sub-model is a base station, the inference node of the second sub-model is UE, and the like.

A CSI feedback scenario of a downlink channel is used as an example, to describe CSI feedback in a case of different lengths of feedback bits by using a same AI model.

In a wireless network, a length of the feedback bit B is determined by a base station, and is usually not fixed. For example, if the base station expects to obtain higher CSI recovery precision, UE may feed back more feedback bits. In this case, the length of the feedback bit B is long. Alternatively, if the base station expects to reduce CSI feedback overheads, UE may feed back fewer feedback bits. In this case, the length of the feedback bit B is short. In a design, because the length of the feedback bit B is not fixed, for each feedback bit B, a pair of a sub-model f and a sub-model g that correspond to each other need to be trained. Consequently, overheads for AI model training and storage are high.

In this application, an AI model may be designed, and the AI model may be applicable to a case of different lengths of the feedback bits B. Subsequently, this application is described in terms of training data collection, training data processing, model training, model deployment, model inference, and the like.

Training data collection.

In the CSI feedback scenario, a feedback bit is an intermediate result of an overall CSI feedback AI model, and may also be considered as output data of the sub-model f and input data of the sub-model g. In this application, the feedback bit B is also considered as the training data.

A training dataset is determined based on an application scenario of the AI model. The training dataset includes training data of all possible lengths of the feedback bit B in the application scenario, to enable the AI model to achieve good performance in various lengths of the feedback bit B. In this application, each piece of training data includes a training sample, a feedback bit B, and a label. The training sample and the label are the same, and are both a downlink channel or feature information H of a downlink channel. For example, if an AI model that may be applicable to CSI feedback in which lengths of the feedback bits B are 20, 30, and 40 is expected to be trained, the training data includes the feedback bits B whose lengths are 20, 40, and 60. Certainly, the training data further needs to include training samples and labels that correspond to the feedback bits B of all lengths. For example, for a feedback bit B whose length is 20, the training data needs to include a training sample, the feedback bit B (20), and a label. The training sample may be a downlink channel or feature information H of a downlink channel obtained by the UE, and the label may be a downlink channel or feature information $\tilde{H}$ of a downlink channel correctly restored by the base station.

Training data processing.

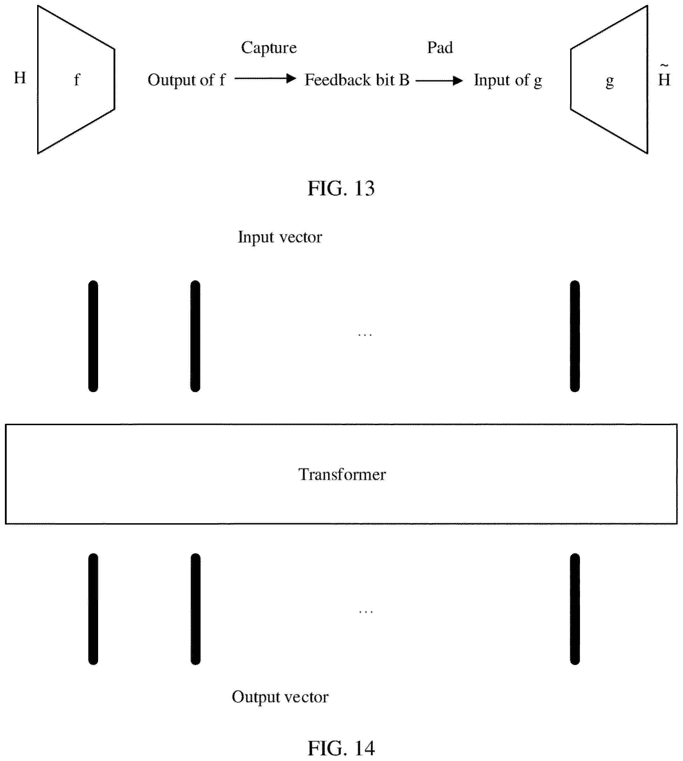

In this application, as shown in FIG. 13, the training data processing includes truncating output data of the sub-model f to enable a length of the output data of the sub-model f to be the same as a length of the feedback bit B, and padding the feedback bit B to enable a length of the feedback bit B to be the same as a length of input data of the sub-model g.

In this application, a truncating rule may be one or more of truncating in the front, truncating in the rear, truncating in the middle, truncating at two sides, truncating at equal intervals, truncating at unequal intervals, or the like. This is not limited.

For example, the output data of the sub-model f is $A = [A_1, A_2, ... , A_{60}]$.

If the length of the feedback bit B is 20, 20 elements may be truncated out of the output data A of the sub-model f. For example, first 20 elements may be truncated out of A, and truncated output data is the feedback bit $B = [A_1, A_2, ..., A_{20}]$. Alternatively, one element is truncated out of A at an interval of three elements, and the feedback bit is $B = [A_1, A_4, ... , A_{58}]$.

If the length of the feedback bit B is 40, 40 elements may be truncated out of A. For example, first 40 elements are truncated out of A, and the feedback bit is $B = [A_1, A_2, ..., A_{40}]$. Alternatively, two elements are truncated out of A at an interval of three elements, and the feedback bit is $B = [A_1, A_2, A_4, A_5, ... , A_{58}, A_{59}]$.

If the length of the feedback bit B is 60, data truncating may not be performed on A, and the feedback bit is $B = A = [A_1, A_2, ..., A_{60}]$.

After truncating, the training data includes feedback bits of different lengths, and therefore, the training data needs to be padded. Padded data is used as an input of the sub-model g. A padding rule may be one or more of padding in the front, padding in the rear, padding in the middle, padding on two sides, padding at equal intervals, or padding at unequal intervals. This is not limited. A padding value may be 0, an extremely large positive number, an extremely small negative number, or the like. This is not limited.

For example, if the length of the feedback bit B is 20, first input data of the sub-model g is the feedback bit B

= [$A_1$, $A_2$, ..., $A_{20}$], and an input length of the sub-model f is 60, padded input data of the sub-model g is C = [$A_1$, $A_2$, ..., $A_{20}$, 0,0, ...,0].

If the length of the feedback bit B is 40, first input data of the sub-model g is the feedback bit B = [$A_1$, $A_2$, ..., $A_{40}$], and an input length of the sub-model f is 60, padded input data of the sub-model g is C = [$A_1$, $A_2$, ... , $A_{40}$, 0,0, ... , 0].

If the length of the feedback bit B is 60, and a length of input data of the sub-model f is 60, the feedback bit B is no longer padded, and the input of the sub-model g is C = B = [$A_1$, $A_2$, ..., $A_{60}$].

The padding rule may be independent of the truncating rule, or may match the truncating rule. For example, if elements in the front of the output data of the sub-model f are truncated out, the feedback bit may be padded in the rear of the feedback bit, or the like.

It should be noted that, although in this application, the feedback bit B is considered as the training data, actually, the feedback bit B is an intermediate result generated by the AI model, that is, the feedback bit B is generated only in a training or inference process. The foregoing truncating and padding operations on the feedback bit B occur in the training or inference process.

Model training.

The length of the input data and the length of the output data of the AI model are determined. A length of the output data of the sub-model f is greater than or equal to a length of a feedback bit B with a longest length in the training data, and a length of the input data of the sub-model g is greater than or equal to the length of the feedback bit B with the longest length in the training data.

The sub-model f and the sub-model g are trained by using training data obtained after the foregoing training data that includes a plurality of lengths of the feedback bits B is processed. As described above, the training data includes the training sample, the label, and the feedback bit B. A model training process may include the following: inputting input training data (for example, the training sample) to the sub-model f, to obtain first output training data of the sub-model f; truncating the first output training data of the sub-model f, where a length of the first output training data is truncated to a target length, and the target lengths are all potential possible lengths of feedback bits in the application scenario of the AI model, to obtain second output data of the sub-model f; obtaining first input training data of the sub-model g based on the second output data of the sub-model f; padding the first input training data, where a length of padded first input training data is the same as the input length of the sub-model g, and the padded first input training data is referred to as second input training data; obtaining output training data of the sub-model g based on the second input training data and the sub-model g; and adjusting, based on the input training data of the sub-model f and the output training data of the sub-model g, at least one of the following: a parameter of the sub-model f, or a parameter of the sub-model g. For example, a piece of input training data (namely, the training sample) and a corresponding label that are of the first sub-model f are determined; a value of a loss function is determined based on the label and the output training data of the sub-model g; and if the value of the loss function is less than a threshold or meets a target requirement, training for the sub-model f and the sub-model g is completed; or if the value of the loss function is not less than a threshold or does not meet a target requirement, the parameter of the sub-model f and/or the parameter of the sub-model g are/is adjusted, and training for the sub-model f and the sub-model g continues.

Model deployment.

When a node for performing model training is different from a node for performing model inference, model deployment needs to be performed. To be specific, a model training node needs to send a trained AI model to a model inference node. In this application, the model training node needs to send the AI model to the model inference node, and further needs to indicate the data processing method for the AI model to the model inference node, to enable the model inference node to correctly use a same AI model to complete CSI feedback tasks in different lengths of feedback bits B. The data processing method for the AI model includes a data padding rule, a data truncating rule, and the like.

Model inference.

The model inference node may correctly use the AI model to complete CSI feedback tasks in different lengths of feedback bits B according to the data processing method that is for the AI model and that is indicated by the model training node. In other words, the model inference node processes data during model inference by using a rule the same as that of the training data processing method. For example, when the UE uses the sub-model f, the UE obtains a downlink channel response H, and inputs the downlink channel response H to the sub-model f, to obtain output data of the sub-model f. The UE truncates, based on a length of the feedback bit B configured by the base station and by using a truncating rule the same as that used for the output data of the sub-model f during training, output data of the sub-model f during inference, to obtain the feedback bit B for inference. The UE feeds back the feedback bit B to the base station. The base station pads the feedback bit during inference in a padding manner the same as that used for padding the feedback bit B during training, and then restores the downlink channel response H by using the sub-model g.

In this design, the output of the sub-model f is truncated into feedback bits B of different lengths, and the feedback bits B of different lengths are padded into same-length input data of the sub-model g, so that an AI model that may be used for CSI feedback in a case of a plurality of lengths of the feedback bits B can be trained.

In this application, an example in which the first output data of the first sub-model is truncated and the input data of the second sub-model is padded is used for description, and is not intended to limit this application. For example, in a design, the output data of the first sub-model may be padded, the input data of the second sub-model may be truncated, and the like. In addition, in this application, a process of processing the output data of the first sub-model and the input data of the second sub-model is mainly described. In this application, whether the input data of the first sub-model and the output data of the second sub-model are processed is not limited. For example, in a design, first input data of the first sub-model may be processed, to obtain second input data of the first sub-model; first output data of the first sub-model is determined based on the second input data of the first sub-model and the first sub-model; and the first output data of the first sub-model is truncated (or padded), to obtain second output data of the first sub-model. First input data of the second sub-model is obtained based on the second output data of the first sub-model. The first input data of the second sub-model is padded (or truncated), to obtain second input data of the second sub-model. First output data of the second sub-model is obtained based on the second input data of the second sub-model and the second sub-model. The first output data of the second sub-model is processed, to obtain second output data of the second sub-model. A manner of processing the first input data of the first sub-model and a manner of processing the first output data of the second sub-model are not limited. For example, this embodiment may be combined with the foregoing process of processing the input data and the output data. For example, the first input data of the first sub-model is padded or truncated, and the first output data of the second sub-model is truncated or padded.

In another design, the data processing method for the AI model includes at least one of the following: an input data splitting method or an output data reassembly method.

In this design, that the model training node performs model training according to the data processing method for the AI model includes: performing data splitting on first input training data according to the input data splitting method, to obtain second input training data; determining first output training data based on the second input training data and the AI model; performing data reassembly on the first output training data according to the output data reassembly method, to obtain second output training data; and performing parameter adjustment on the AI model based on the second output training data.

That the model inference node performs model inference according to the data processing method for the AI model includes: performing data splitting on first input data according to the input data splitting method, to obtain second input data; obtaining first output data based on the second input data and the AI model; and performing data reassembly on the first output data according to the output data reassembly method, to obtain second output data.

For example, an AI model like a Transformer whose input data and/or output data needs to be processed is used as an example for description.

The Transformer is a sequence-to-sequence AI model, and is the earliest to be applied to the natural language processing field like translation. Lengths of sentences are various, and one of features of the Transformer is that the Transformer supports an input of any length. Therefore, theoretically, the transformer may be applicable to signal processing for different radio resource configurations. As shown in FIG. 14, both an input and an output of the Transformer are vector sets. In radio signal processing, usually, an object that needs to be processed is a radio signal, a radio channel, or the like. Dimensions of the radio signal or the radio channel usually include a time domain, a frequency domain, a space domain, and the like. Therefore, when the Transformer is applied to radio signal processing, original data needs to be processed, converted into a vector set, and input to the Transformer. Then, a vector set output by the Transformer is converted into target data.

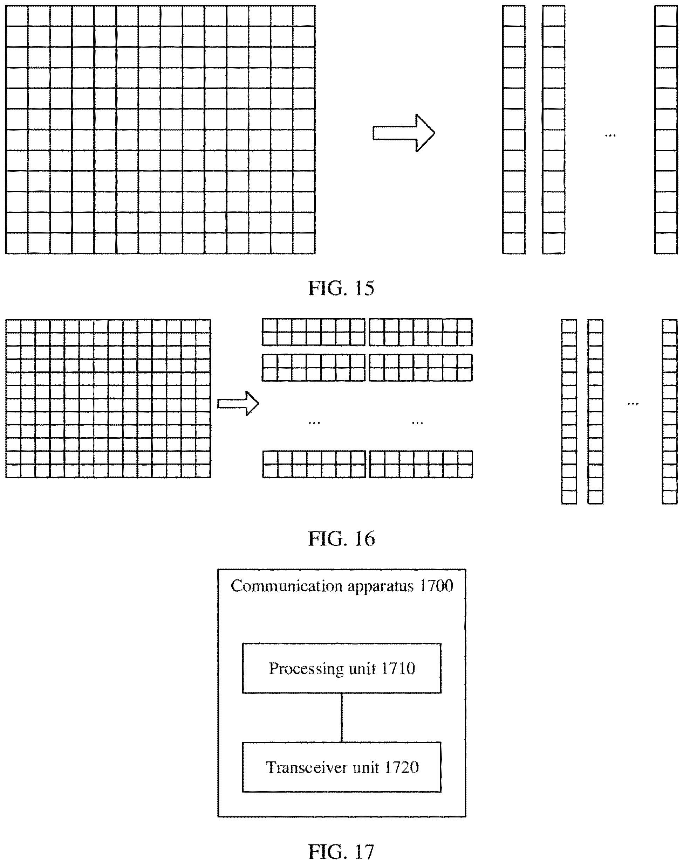

There may be a plurality of manners to convert the original data into the vector set and converting the vector set into the target data. For example, a radio channel whose original data is 12 subcarriers and 14 OFDM symbols is used as an example. As shown in FIG. 15, in a time domain dimension, original data of 12*14 may be directly split into 14 vectors whose dimensions are 12. Alternatively, as shown in FIG. 16, the original data of 12*14 may be first split into 12 matrices of 2*7, and then each matrix of 2*7 is converted into a vector whose dimension is 14. Certainly, another splitting method may be further used. Similarly, there are a plurality of methods for reassembling a plurality of vectors output by the Transformer into the target data.

There are a plurality of original data splitting methods and a plurality of target data reassembly methods. Therefore, the model training node needs to send a trained AI model to the model inference node, and further needs to notify the model inference node of an original data splitting method and a target data reassembly method during training, to ensure that the model inference node can correctly use the AI model to complete model inference. The model inference node splits the original data and reassembles output data of the AI model by using methods the same as those used during the training.

In this application, for an AI model like the Transformer whose input and output are subject to a specific requirement, the model training node indicates, to the model inference node, the original data splitting method and the method for reassembling output data of the AI model, so that the AI model can correctly process a signal in the wireless network.

It may be understood that, to implement the functions in the foregoing methods, the model training node and a model usage node include corresponding hardware structures and/or software modules for performing the functions. A person skilled in the art should be easily aware that, with reference with units and method steps in the examples described in this application, this application can be implemented by hardware or a combination of hardware and computer software. Whether a function is performed by hardware or hardware driven by computer software depends on a particular application scenario and a design constraint that are of a technical solution.

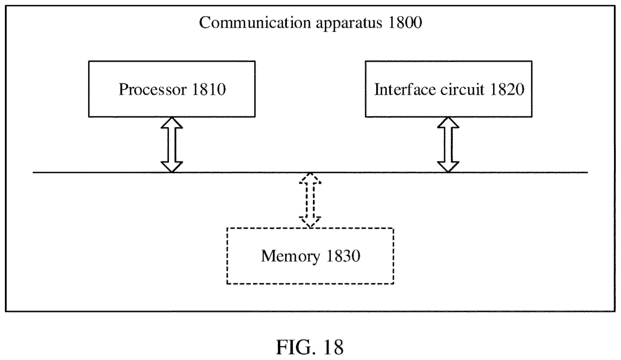

FIG. 17 and FIG. 18 each are a diagram of a possible structure of a communication apparatus according to this application. These communication apparatuses may be configured to implement functions of the model training node or the model inference node in the foregoing methods, and therefore, can also implement beneficial effects of the foregoing methods.

As shown in FIG. 17, a communication apparatus 1700 includes a processing unit 1710 and a transceiver unit 1720. The communication apparatus 1700 is configured to implement a function of the first node in the method shown in FIG. 8. The first node may be a model training node or a model inference node. When the communication apparatus 1700 is configured to implement the function of the first node in the method shown in FIG. 8, it is as follows.

In a design, the processing unit 1710 is configured to: determine a data processing method for a model, and implement, according to the data processing method for the model, at least one of the following: performing model training or performing model inference, where

the data processing method for the model includes at least one of the following: an input data padding method for the model or an output data truncating method for the model; or the data processing method for the model includes at least one of the following: an input data truncating method for the model, or an output data padding method for the model.

In another design, the transceiver unit 1720 is configured to send indication information to a second node, and the indication information indicates a data processing method for a model, where

the data processing method for the model includes at least one of the following: an input data padding method for the model or an output data truncating method for the model; or the data processing method for the model includes at least one of the following: an input data truncating method for the model, or an output data padding method for the model.

For more detailed descriptions of the processing unit 1710 and the transceiver unit 1720, directly refer to related descriptions of the method shown in FIG. 8. Details are not described herein.

As shown in FIG. 18, a communication apparatus 1800 includes a processor 1810 and an interface circuit 1820. The processor 1810 and the interface circuit 1820 are coupled to each other. It may be understood that the interface circuit 1820 may be a transceiver or an input/output interface. Optionally, the communication apparatus 1800 may further include a memory 1830, configured to: store instructions to be executed by the processor 1810, store input data required for running the instructions by the processor 1810, or store data generated after the processor 1810 runs the instructions.

When the communication apparatus 1800 is configured to implement the foregoing method, the processor 1810 is configured to implement a function of the processing unit 1710, and the interface circuit 1820 is configured to implement a function of the transceiver unit 1720.

When the communication apparatus is a module applied to a first node, the module of the first node implements the function of the first node in the foregoing method. The module of the first node receives information from another module (for example, a radio frequency module or an antenna) of the first node, where the information is sent by a second node to the first node. Alternatively, the module of the first node sends information to another module (for example, a radio frequency module or an antenna) of the first node, where the information is sent by the first node to a second node. The module of the first node herein may be a baseband chip of the first node, or may be another module.

It may be understood that the processor in this application may be a central processing unit (central processing unit, CPU), or may be another general-purpose processor, a digital signal processor (digital signal processor, DSP), or an application-specific integrated circuit (application-specific integrated circuit, ASIC), a field programmable gate array (field programmable gate array, FPGA), or another programmable logic device, a transistor logic device, a hardware component, or any combination thereof. The general-purpose processor may be a microprocessor or may be any regular processor.

The memory in this application may be a random access memory, a flash memory, a read-only memory, a programmable read-only memory, an erasable programmable read-only memory, an electrically erasable programmable read-only memory, a register, a hard disk, a removable hard disk, a CD-ROM, or a storage medium of any other form well-known in the art.

For example, a storage medium is coupled to the processor, so that the processor can read information from the storage medium and write information into the storage medium. The storage medium may alternatively be a component of the processor. The processor and the storage medium may be located in an ASIC. In addition, the ASIC may be located in a base station or a terminal. Certainly, the processor and the storage medium may exist in a base station or terminal as discrete components.

All or some of the methods in this application may be implemented by software, hardware, firmware, or any combination thereof. When software is used to implement the methods, all or some of the methods may be implemented in a form of a computer program product. The computer program product includes one or more computer programs or instructions. When the computer programs or instructions are loaded and executed on the computer, all or some of the procedures or functions according to this application are executed. The computer may be a general-purpose computer, a dedicated computer, a computer network, a network device, user equipment, a core network device, OAM, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state disk. The computer-readable storage medium may be a volatile or non-volatile storage medium, or may include two types of storage media: a volatile storage medium and a non-volatile storage medium.

In this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" usually indicates an "or" relationship between the associated objects. In a formula in this application, the character "/" indicates a "division" relationship between the associated objects. "Including at least one of A, B, or C" may indicate: including A; including B; including C; including A and B; including A and C; including B and C; and including A, B, and C.

It may be understood that various numerals used in this application are merely differentiated for ease of description, but are not used to limit the scope of this application. The sequence numbers of the foregoing processes do not mean execution sequences, and the execution sequences of the processes should be determined based on functions and internal logic of the processes.

## Claims

1. A data processing method for a model, comprising:

   determining the data processing method for the model; and
   implementing, according to the data processing method for the model, at least one of the following: performing model training or performing model inference, wherein
   the data processing method for the model comprises at least one of the following: an input data padding method for the model or an output data truncating method for the model; or
   the data processing method for the model comprises at least one of the following: an input data truncating method for the model, or an output data padding method for the model.

2. The method according to claim 1, wherein the determining the data processing method for the model comprises:

   receiving indication information from a first node, wherein the indication information indicates the data processing method for the model; or
   determining the data processing method for the model as defined in a protocol.

3. The method according to claim 1 or 2, wherein the input data padding method or the output data padding method comprises at least one of the following: a length of padded data, a padding data type, or a data padding rule.

4. The method according to any one of claims 1 to 3, wherein the output data truncating method or the input data truncating method comprises at least one of the following: a length of data after truncating, or a data truncating rule.

**5.** The method according to any one of claims 1 to 4, wherein the performing model inference according to the data processing method for the model comprises:

performing data padding on first input data according to the input data padding method, to obtain second input data;
determining first output data based on the second input data and the model; and
performing data truncating on the first output data according to the output data truncating method.

**6.** The method according to any one of claims 1 to 5, wherein the performing model training according to the data processing method for the model comprises:

performing data padding on first input training data according to the input data padding method, to obtain second input training data;
determining first output training data based on the second input training data and the model; and
performing data truncating on the first output training data according to the output data truncating method, to obtain second output training data; and
performing parameter adjustment on the model based on the second output training data.

**7.** The method according to any one of claims 1 to 4, wherein the performing model inference according to the data processing method for the model comprises:

performing data truncating on first input data according to the input data truncating method, to obtain second input data;
determining first output data based on the second input data and the model; and
performing data padding on the first output data according to the output data padding method.

**8.** The method according to any one of claims 1 to 4 or claim 7, wherein the performing model training according to the data processing method for the model comprises:

performing data truncating on first input training data according to the input data truncating method, to obtain second input training data;
determining first output training data based on the second input training data and the model;
performing data padding on the first output training data according to the output data padding method, to obtain second output training data; and
performing parameter adjustment on the model based on the second output training data.

**9.** The method according to any one of claims 1 to 4, wherein the model comprises a first sub-model, and the performing model inference according to the data processing method for the model comprises:

determining first output data of the first sub-model; and
performing data truncating on the first output data according to the output data truncating method.

**10.** The method according to any one of claims 1 to 4 or claim 9, wherein the model comprises a second sub-model, and the performing model inference according to the data processing method for the model comprises:

performing data padding on first input data according to the input data padding method, to obtain second input data; and
determining first output data based on the second input data and the second sub-model.

**11.** The method according to any one of claims 1 to 4, claim 9, or claim 10, wherein the model comprises a first sub-model and a second sub-model, and the performing model training according to the data processing method for the model comprises:

determining first output training data of the first sub-model based on input training data of the first sub-model and the first sub-model;
performing data truncating on the first output training data according to the output data truncating method, to obtain first input training data of the second sub-model;
performing data padding on the first input training data of the second sub-model according to the input data padding method, to obtain second input training data;

determining output training data of the second sub-model based on the second input training data and the second sub-model; and

adjusting, based on the input training data of the first sub-model and the output training data of the second sub-model, at least one of the following: a model parameter of the first sub-model, or a model parameter of the second sub-model.

12. A data processing method for a model, comprising:

sending indication information to a second node, wherein the indication information indicates the data processing method for the model, wherein

the data processing method for the model comprises at least one of the following: an input data padding method for the model or an output data truncating method for the model; or

the data processing method for the model comprises at least one of the following: an input data truncating method for the model, or an output data padding method for the model.

13. The method according to claim 12, wherein the input data padding method or the output data padding method comprises at least one of the following: a length of padded data, a padding data type, or a data padding rule.

14. The method according to claim 12 or 13, wherein the output data truncating method or the input data truncating method comprises at least one of the following: a length of data after truncating, or a data truncating rule.

15. A communication apparatus, comprising a unit configured to implement the method according to any one of claims 1 to 11.

16. A communication apparatus, comprising a processor and a memory, wherein the processor is coupled to the memory, and the processor is configured to implement the method according to any one of claims 1 to 11.

17. A communication apparatus, comprising a unit configured to implement the method according to any one of claims 12 to 14.

18. A communication apparatus, comprising a processor and a memory, wherein the processor is coupled to the memory, and the processor is configured to implement the method according to any one of claims 12 to 14.

19. A communication system, comprising the communication apparatus according to claim 15 or 16 and the communication apparatus according to claim 17 or 18.

20. A computer-readable storage medium, wherein the computer-readable storage medium stores instructions, and when the instructions are run on a computer, the computer is enabled to perform the method according to any one of claims 1 to 11, or the method according to any one of claims 12 to 14.

21. A computer program product, comprising instructions, and when the instructions are run on a computer, the computer is enabled to perform the method according to any one of claims 1 to 11, or the method according to any one of claims 12 to 14.

FIG. 1

EP 4 443 835 A1

FIG. 2

FIG. 3

FIG. 4a

FIG. 4b

AI model whose input format corresponds to 4 RBs

4 RBs

AI model whose input format corresponds to 8 RBs

8 RBs

FIG. 4c

Performance feedback

Data source

Training data → Model training node

Model deployment/ update

Model feedback

Inference data → Model inference node → Output → Actor entity

FIG. 5

$$y = f\left(\sum_{i=0}^{n} w_i x_i + b\right)$$

FIG. 6

FIG. 7

801: A first node determines a data processing method for an AI model

802: The first node implements, according to the data processing method for the AI model, at least one of the following: performing model training or performing model inference

FIG. 8

Model training node

Model inference node

901: Collect training data

902: Perform model training: processing the training data

903: Model deployment: trained AI model and corresponding data processing method

904: The model inference node performs model inference according to the data processing method for the AI model

FIG. 9A

Update a parameter of the AI model

No

First input training data → Input data processing → Second input training data → AI model → First output training data → Output data processing → Second output training data → Determine whether a target function meets a requirement → Yes → Output the AI model

FIG. 9B

First
input data | Input data
processing | Second
input data | AI model | First output
data | Output data
processing | Second
output data

**FIG. 9C**

**FIG. 10**

FIG. 11

H or W    f    Feedback bit B    g    $\tilde{H}$ or $\tilde{W}$

FIG. 12

H | f       Output of f $\xrightarrow{\text{Capture}}$ Feedback bit B $\xrightarrow{\text{Pad}}$ Input of g       g | $\tilde{H}$

FIG. 13

Input vector

|   |   | ... |   |

Transformer

|   |   | ... |   |

Output vector

FIG. 14

FIG. 15

FIG. 16

FIG. 17

Communication apparatus 1800

Processor 1810

Interface circuit 1820

Memory 1830

FIG. 18

<table>
<tr><td colspan="2">**INTERNATIONAL SEARCH REPORT**</td><td colspan="2">International application No.<br>**PCT/CN2022/144185**</td></tr>
</table>

**A. CLASSIFICATION OF SUBJECT MATTER**

H04L 41/14(2022.01)i

According to International Patent Classification (IPC) or to both national classification and IPC

**B. FIELDS SEARCHED**

Minimum documentation searched (classification system followed by classification symbols)

H04L,H04W,H04B

Documentation searched other than minimum documentation to the extent that such documents are included in the fields searched

Electronic data base consulted during the international search (name of data base and, where practicable, search terms used)

CNTXT, ENTXT, CNABS, DWPI, IEEE: 模型, 训练, 推理, 数据, 处理, 填充, 截断, 截取, 截短, 输入, 输出, 指示, 节点, 协议, 长度, 规则, model, train, inference, data, process, padding, intercept, truncation, input, output, indication, node, protocol, length, rule

**C. DOCUMENTS CONSIDERED TO BE RELEVANT**

| Category* | Citation of document, with indication, where appropriate, of the relevant passages | Relevant to claim No. |
|---|---|---|
| X | CN 111985243 A (CHINA MOBILE (SUZHOU) SOFTWARE TECHNOLOGY CO., LTD. et al.) 24 November 2020 (2020-11-24)<br>description, paragraphs [0057]-[0060] and [0077]-[0116] | 1-21 |
| A | CN 109885832 A (PING AN TECHNOLOGY (SHENZHEN) CO., LTD.) 14 June 2019 (2019-06-14)<br>entire document | 1-21 |
| A | CN 110855474 A (GUANGZHOU GCI SCIENCE & TECHNOLOGY CO., LTD.) 28 February 2020 (2020-02-28)<br>entire document | 1-21 |
| A | CN 111382557 A (BYTEDANCE LTD. et al.) 07 July 2020 (2020-07-07)<br>entire document | 1-21 |
| A | CN 112149736 A (TENCENT TECHNOLOGY (SHENZHEN) CO., LTD.) 29 December 2020 (2020-12-29)<br>entire document | 1-21 |

☑ Further documents are listed in the continuation of Box C. ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **17 March 2023** | **22 March 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

| International application No. |
|---|
| **PCT/CN2022/144185** |

**C.    DOCUMENTS CONSIDERED TO BE RELEVANT**

| Category* | Citation of document, with indication, where appropriate, of the relevant passages | Relevant to claim No. |
|---|---|---|
| A | CN 112215238 A (ALIPAY (HANGZHOU) INFORMATION TECHNOLOGY CO., LTD.) 12 January 2021 (2021-01-12)<br>        entire document | 1-21 |
| A | CN 112884092 A (SHENZHEN SUOXINDA DATA TECHNOLOGY CO., LTD.) 01 June 2021 (2021-06-01)<br>        entire document | 1-21 |
| A | US 2021097383 A1 (INTERNATIONAL BUSINESS MACHINES CORP.) 01 April 2021 (2021-04-01)<br>        entire document | 1-21 |

Form PCT/ISA/210 (second sheet) (July 2022)

INTERNATIONAL SEARCH REPORT
Information on patent family members

International application No.

**PCT/CN2022/144185**

| Patent document cited in search report | | | Publication date (day/month/year) | Patent family member(s) | Publication date (day/month/year) |
|---|---|---|---|---|---|
| CN | 111985243 | A | 24 November 2020 | None | |
| CN | 109885832 | A | 14 June 2019 | None | |
| CN | 110855474 | A | 28 February 2020 | None | |
| CN | 111382557 | A | 07 July 2020 | None | |
| CN | 112149736 | A | 29 December 2020 | None | |
| CN | 112215238 | A | 12 January 2021 | None | |
| CN | 112884092 | A | 01 June 2021 | None | |
| US | 2021097383 | A1 | 01 April 2021 | None | |

Form PCT/ISA/210 (patent family annex) (July 2022)

**EP 4 443 835 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111658528